# EUROPEAN PATENT APPLICATION

(11) **EP 4 848 814 A1**
(43) Date of publication of application: **02.12.2026**
(21) Application number: 25760845.5
(22) Date of filing: 21.02.2025
(51) Int. Cl.: H04W 36/06

(54) **CELL HANDOVER METHOD, COMMUNICATION APPARATUS AND SYSTEM**

(30) Priority: 29.02.2024 CN 202410245976
(71) Applicant: Huawei Technologies Co., Ltd., Shenzhen, Guangdong 518129 (CN)
(72) Inventor: WANG, Yu, Shenzhen, Guangdong 518129 (CN)
(74) Representative: Epping - Hermann - Fischer
(86) International application number: PCT/CN2025/078441
(87) International publication number: WO 2025/180303

(57) **Abstract**

A cell handover method, a communication apparatus, and a system are provided. In the method, a first network device sends a handover request message to a second network device, where the handover request message is used to request handover of a terminal device to the second network device. After a handover request acknowledgment message from the second network device is obtained, a path switch request message is sent to a core network device, where the path switch request message is used to request switching of a data transmission path between the terminal device and the core network device to the second network device. According to the method, the data transmission path between the terminal device and the core network device can be switched in advance, thereby alleviating handover failures caused by intermittent connectivity of ISL or GSL transmission, and improving a handover success rate of the terminal device to the second network device.

## Description

This application claims priority to Chinese Patent Application No. 202410245976.9, filed with the China National Intellectual Property Administration on February 29, 2024 and entitled "CELL HANDOVER METHOD, COMMUNICATION APPARATUS, AND SYSTEM", which is incorporated herein by reference in its entirety.

### TECHNICAL FIELD

This application relates to the communication field, and in particular, to a cell handover method, a communication apparatus, and a system.

### BACKGROUND

A non-terrestrial network (non-terrestrial network, NTN) includes nodes such as satellite networks, high-altitude platform stations, and uncrewed aerial vehicles. The NTN offers advantages such as global coverage, long-distance transmission, flexible networking, easy deployment, and geographical condition independence, and has been widely applied in fields such as maritime communication, positioning and navigation, disaster relief, scientific experiments, video broadcasting, and earth observation. A terrestrial 5G network and a satellite network complement each other and are integrated to form a space-air-ground-sea integrated communication network that provides seamless global coverage, thereby meeting diverse, ubiquitous service requirements of users.

Usually, satellite communication systems can be classified into steering satellite communication systems (steering systems for short) and non-steering satellite communication systems (non-steering systems for short) based on operating modes of payloads (for example, beams). A steering system means that within a period of time, a satellite dynamically adjusts the beam direction, so that the beam approximately covers the same area on the ground. A non-steering system means that within a period of time, the beam coverage area of a satellite moves together with the satellite. The steering system may include an earth-fixed (earth-fixed) mode or a quasi-earth-fixed (quasi-earth-fixed) mode. The non-steering system may include an earth-moving (earth-moving) mode.

In satellite communication systems (especially in earth-fixed scenarios), movement of a satellite node may cause group handover (handover, HO) or group reselection problems for terminal devices in a beam position in a specific area. Currently, handover or reselection in an NTN is usually designed for transparent (transparent) satellite scenarios. However, in regenerative (regenerative) satellite scenarios, handover between different satellites may pass through long inter-satellite links (inter-satellite links, ISLs) and/or ground-satellite links (ground-satellite links, GSLs). Due to the dynamic nature of satellite topology, ISL and/or GSL transmission may suffer intermittent connectivity, which may increase end-to-end transmission latency, and may even cause handover failures of terminal devices.

### SUMMARY

This application provides a cell handover method, a communication apparatus, and a system, to help reduce a mobility interruption time and improve a handover success rate of a terminal device.

According to a first aspect, a cell handover method is provided. The method may be applied to a first network device, for example, may be performed by the first network device, or may be performed by a component (for example, a processor, a chip, or a chip system) configured in the first network device, or may be implemented by a logical module or software that can implement all or some functions of the first network device. This is not limited in this application.

The method includes: sending a handover request message to a second network device, where the handover request message is used to request handover of a terminal device to the second network device, and the second network device is a candidate (candidate) network device; receiving a handover request acknowledgment message from the second network device; and sending a path switch request message to a core network device, where the path switch request message is used to request switching of a data transmission path between the terminal device and the core network device to the second network device.

The terminal device is located within a signal coverage area of the first network device, or the first network device may provide a network service for the terminal device.

When determining, based on a measurement report reported by the terminal device, that the terminal device needs to be handed over to a network device, the first network device may determine a candidate network device for the terminal device. As described above, there may be one or more candidate network devices. The first network device may send a handover request message to each of the one or more candidate network devices (including the second network device), to request handover of the terminal device to a candidate network device.

Each candidate network device that receives the handover request message may send a handover request acknowledgment message to the first network device when determining to agree to handover of the terminal device. In this specification, it is assumed that the second network device agrees to the handover of the terminal device, and sends the handover request acknowledgment message to the first network device.

There may be one or more candidate network devices. Therefore, the path switch request message may be used to request switching of a data transmission path between the terminal device and the core network device to the one or more candidate network devices.

Switching the data transmission path between the terminal device and the core network device to the candidate network device is, in other words, switching a data transmission path that is originally used by the terminal device to perform data transmission with the core network device through the first network device to a data transmission path that is used by the terminal device to perform data transmission with the core network device through the candidate network device, or switching the data transmission path between the terminal device and the core network device from the first network device to the candidate network device.

It is not difficult to learn that the path switch request message sent by the first network device to the core network device is sent after the first network device determines a candidate network device that agrees to perform the handover. In other words, the data transmission path between the terminal device and the core network device can be switched before the terminal device determines a target network device from the candidate network devices and completes the handover from the first network device to the target network device.

Based on the foregoing solution, when the first network device determines that the terminal device needs to be handed over but the terminal device has not been handed over, the first network device may determine a candidate network device (including the second network device) for the terminal device, and request the core network device to switch the data transmission path between the terminal device and the core network device, to switch the data transmission path from the first network device to the candidate network device (for example, the second network device), and does not need to wait until the terminal device completes the handover from a source network device (namely, the first network device) to the target network device, to switch the data transmission path between the terminal device and the core network device. In this way, the data transmission path between the terminal device and the core network device can be switched in advance. In general, time of handover (including handover of the terminal device on an access side and switching of the data transmission path between the terminal device and the core network device) can be shortened, thereby alleviating handover failures caused by intermittent connectivity of ISL or GSL transmission, and improving a handover success rate of the terminal device to the second network device.

With reference to the first aspect, in some implementations of the first aspect, first information is received from the core network device, where the first information indicates a validity period of a first path, and the first path is used for communication between the first network device and the second network device within the validity period; and sending the path switch request message to the core network device includes: sending the path switch request message to the core network device within the validity period.

The first path is a path for communication between the first network device and the second network device through an Xn interface, and the first path may be used to exchange data of the terminal device between the first network device and the second network device.

The first path is used for communication between the first network device and the second network device within the validity period. In other words, within the validity period, the first network device and the second network device may communicate with each other through the first path, and after the validity period ends, the first network device and the second network device usually cannot communicate with each other through the first path. In other words, the first path usually expires after the validity period ends, and an end time of the validity period may be understood as an expiration time of the first path. The validity period may also be referred to as an effective time period, validity time, or the like. This is not limited.

The first network device may determine a candidate network device for the terminal device within the validity period of the first path, and request the core network device to switch the data transmission path between the terminal device and the core network device. In other words, the validity period may be used by the first network device to control that time for sending the path switch request message to the core network device is not later than the expiration time of the first path.

With reference to the first aspect, in some implementations of the first aspect, context of the terminal device is released based on time information after the terminal device completes handover, where the time information indicates a time at which the first network device releases the context of the terminal device.

With reference to the first aspect, in some implementations of the first aspect, the path switch request message carries the time information, and the time information indicates the time at which the first network device releases the context of the terminal device.

The time at which the first network device releases the context of the terminal device and that is indicated by the time information may be related to the validity period of the first path. For example, the time may be the end time of the validity period, or time near the end time of the validity period. Therefore, that the first network device releases the context of the terminal device based on the time information after the terminal device completes the handover may also be replaced with that the first network device releases the context of the terminal device based on the validity period of the first path. In other words, the first network device may automatically release the context of the terminal device within the validity period of the first path. In addition, because the validity period of the first path corresponds to the expiration time of the first path, that the first network device automatically releases the context of the terminal device based on the time information after the terminal device completes the handover may also be replaced with that the first network device automatically releases the context of the terminal device based on the expiration time of the first path. The first network device may automatically release the context of the terminal device before the first path expires, or in other words, the time at which the first network device automatically releases the context of the terminal device is not later than the expiration time of the first path.

With reference to the first aspect, in some implementations of the first aspect, the path switch request message further indicates the second network device.

As described above, there may be one or more candidate network devices. The path switch request message may carry identifiers of the one or more candidate network devices, and the one or more candidate network devices include the second network device.

When the path switch request message indicates the second network device, the second network device may be indicated by using an identifier of the second network device or other information that can identify the second network device. This is not limited in this application. By indicating the second network device, the core network device may determine a specific network device to which the data transmission path between the terminal device and the core network device is switched.

With reference to the first aspect, in some implementations of the first aspect, a path switch request acknowledgment message from the core network device is received.

With reference to the first aspect, in some implementations of the first aspect, the path switch request acknowledgment message indicates the expiration time of the first path between the first network device and the second network device.

In other words, the expiration time of the first path is related to the validity period of the first path. The expiration time may be, for example, the end time of the validity period. Before the expiration time of the first path arrives, the first network device and the second network device may exchange the data of the terminal device through the first path. After the expiration time of the first path arrives, the first network device stops exchanging data of the terminal device through the first path.

According to a second aspect, a cell handover method is provided. The method may be applied to a core network device. For example, the method may be performed by the core network device, or may be performed by a component (for example, a processor, a chip, or a chip system) configured in the core network device, or may be implemented by a logical module or software that can implement all or some functions of the core network device. This is not limited in this application.

The method includes: receiving a path switch request message from a first network device, where the path switch request message is used to request switching of a data transmission path between a terminal device and the core network device to a second network device, and the second network device is a candidate network device; and sending a path switch request acknowledgment message to the first network device.

Based on the foregoing solution, after receiving the path switch request message from the first network device, the core network device may agree to switch the data transmission path between the terminal device and the core network device from the first network device to the candidate network device (for example, the second network device), and does not need to wait until the terminal device completes the handover from a source network device (namely, the first network device) to the target network device, to switch the data transmission path between the terminal device and the core network device. In this way, the data transmission path between the terminal device and the core network device can be switched in advance. In general, time of handover (including handover of the terminal device on an access side and switching of the data transmission path between the terminal device and the core network device) can be shortened, thereby alleviating handover failures caused by intermittent connectivity of ISL or GSL transmission, and improving a handover success rate of the terminal device to the second network device.

With reference to the second aspect, in some implementations of the second aspect, first information is sent to the first network device, where the first information indicates a validity period of a first path, and the first path is used for communication between the first network device and the second network device within the validity period.

With reference to the second aspect, in some implementations of the second aspect, the path switch request message carries time information, and the time information indicates a time at which the first network device releases context of the terminal device.

With reference to the second aspect, in some implementations of the second aspect, the path switch request message further indicates the second network device.

With reference to the second aspect, in some implementations of the second aspect, the path switch request acknowledgment message indicates an expiration time of the first path between the first network device and the second network device.

The implementations of the second aspect correspond to the implementations of the first aspect. For details, refer to related descriptions in the first aspect. Details are not described again.

According to a third aspect, a cell handover method is provided. The method may be applied to a second network device, for example, may be performed by the second network device, or may be performed by a component (for example, a processor, a chip, or a chip system) configured in the second network device, or may be implemented by a logical module or software that can implement all or some functions of the second network device. This is not limited in this application.

The method includes: receiving a path switch request acknowledgment message from a core network device, where the path switch request acknowledgment message is a response message of the core network device to a path switch request message from a first network device, and the path switch request message is used to request switching of a data transmission path between a terminal device and the core network device to the second network device; and sending the path switch request acknowledgment message to the first network device.

Based on the foregoing solution, the second network device may send the path switch request acknowledgment message from the core network device to the first network device, and the first network device does not need to send the path switch request acknowledgment message to the second network device. This can shorten a time at which the second network device receives the path switch request acknowledgment message, and improve a handover success rate of the terminal device to the second network device.

With reference to the third aspect, in some implementations of the third aspect, the path switch request acknowledgment message indicates an expiration time of a first path between the first network device and the second network device.

The expiration time of the first path has been described in detail in the first aspect. For details, refer to the related descriptions in the first aspect. Details are not described again.

With reference to the third aspect, in some implementations of the third aspect, a user data packet (user data packet) related sequence number (sequence number, SN) status report from the terminal device is received.

The SN status report may include an SN number of a last data packet received by the terminal device before the terminal device is handed over from a source network device to a target network device. Based on the SN number, the target network device may determine a next data packet that needs to be transmitted, so that the target network device can transmit, in a timely manner after the handover, a data packet that is not scheduled by the source network device, to ensure service continuity.

According to a fourth aspect, a cell handover method is provided. The method may be applied to a terminal device, for example, may be performed by the terminal device, or may be performed by a component (for example, a processor, a chip, or a chip system) configured in the terminal device, or may be implemented by a logical module or software that can implement all or some functions of the terminal device. This is not limited in this application.

The method includes: handing over from a first network device to a third network device; and sending a data packet-related sequence number SN status report of the terminal device to the third network device.

Based on the foregoing solution, the terminal device may be handed over from the first network device to a target network device (for example, the third network device), and send, to the third network device, an SN number of a last data packet received by the terminal device before the terminal device is handed over from a source network device to the target network device, to implement handover of the terminal device.

With reference to the fourth aspect, in some implementations of the fourth aspect, third information from the first network device is received, where the third information indicates at least one candidate network device and at least one piece of quality of service (quality of service, QoS) corresponding to the at least one candidate network device, and each of the at least one piece of QoS is QoS of a path bearer between a corresponding candidate network device and the first network device.

The path bearer between the first network device and the candidate network device may be understood as a channel used for communication between the first network device and the candidate network device. The channel may be used for data exchange between the first network device and the candidate network device, for example, data exchange of the terminal device. The path bearer may also be referred to as a path, a channel, a bearer, or the like for short. Because network devices may communicate with each other through an Xn interface, the path bearer may also be referred to as an Xn bearer (Xn bearer), an Xn interface, an Xn interface path, or the like. The QoS of the path bearer may also be referred to as QoS of the Xn bearer or QoS of the bearer, and may be understood as QoS that can be provided by the channel.

It should be noted that this solution is also applicable to a scenario in which network devices communicate with each other through an F1 interface, an E1 interface, an NG interface, or another interface. The F1 interface is an interface between a central unit (central unit, CU) and a distributed unit (distributed unit, DU), the E1 interface is an interface between CUs, and the next generation (next generation, NG) interface is an interface between a radio access network and a core network. When the foregoing solution is applied to the F1 interface, the E1 interface, the NG interface, or another interface, the at least one piece of QoS may be QoS of an interface bearer corresponding to the at least one candidate network device.

A path between the first network device and each of the at least one candidate network device may be a path passing through the Xn interface. In other words, the at least one piece of QoS may include QoS of an Xn bearer between the first network device and each of the at least one candidate network device.

Because there may be a plurality of candidate network devices, the at least one piece of QoS may be a plurality of pieces of QoS. In this case, the plurality of pieces of QoS may be the same or may be different. This is not limited in this application.

The at least one candidate network device may include a second network device. Therefore, the at least one piece of QoS includes QoS of a path bearer between the first network device and the second network device. In other words, the second information may indicate the QoS of the path bearer (or an Xn bearer) between the first network device and the second network device.

The QoS of the path bearer may include at least one of a latency, a packet loss rate, reliability, or throughput.

With reference to the fourth aspect, in some implementations of the fourth aspect, the third information further indicates a validity period of at least one path, the at least one path corresponds to the at least one candidate network device, and a path corresponding to each candidate network device is used for communication with the first network device within a corresponding validity period.

The second network device is used as an example. A path corresponding to the second network device is a path for communication between the first network device and the second network device. The path corresponding to the second network device may be used for communication with the first network device within a validity period corresponding to the second network device.

Because there may be a plurality of candidate network devices, there may be a plurality of paths between the first network device and the candidate network devices. In this case, validity periods of the plurality of paths may be the same or may be different. This is not limited in this application.

With reference to the fourth aspect, in some implementations of the fourth aspect, the third information is carried in a radio resource control (radio resource control, RRC) reconfiguration message.

The RRC reconfiguration message further includes a configuration of a candidate cell and a handover execution condition of the terminal device. The handover execution condition may be related to at least one of a location, time, or signal quality of the candidate cell.

According to a fifth aspect, a cell handover method is provided. The method may be applied to a first network device, for example, may be performed by the first network device, or may be performed by a component (for example, a processor, a chip, or a chip system) configured in the first network device, or may be implemented by a logical module or software that can implement all or some functions of the first network device. This is not limited in this application.

The method includes: receiving second information from a core network device, where the second information indicates at least one piece of QoS, and each of the at least one piece of QoS is QoS of a path bearer between the first network device and one of at least one candidate network device; and sending third information to a terminal device, where the third information indicates the at least one piece of QoS.

Based on the foregoing solution, a network side may indicate, to the terminal device, QoS of a path bearer between the first network device and each of the at least one candidate network device, so that the terminal device can consider a service QoS requirement when selecting a target network device. In other words, handover of the terminal device can be assisted, thereby helping ensure the service QoS requirement of the terminal device and improving user experience of the terminal device. In addition, the network side may further indicate, to the terminal device, a validity period of at least one path corresponding to the at least one candidate network device, so that the terminal device performs handover based on the validity period. This helps avoid a handover failure caused by path failure, and can improve a handover success rate of the terminal device.

With reference to the fifth aspect, in some implementations of the fifth aspect, the second information further indicates a validity period of at least one path, the at least one path corresponds to the at least one candidate network device, and a path corresponding to each candidate network device is used for communication with the first network device within a corresponding validity period; and the third information further indicates the validity period of the at least one path.

With reference to the fifth aspect, in some implementations of the fifth aspect, the second information is mobility control information.

Optionally, the second information is the mobility control information (mobility control information), or is an information element carried in the mobility control information. This is not limited in this application.

In addition to the at least one piece of QoS and the validity period of the at least one path, the mobility control information may further include access restrictions, roaming information, and the like of the terminal device. This is not limited.

With reference to the fifth aspect, in some implementations of the fifth aspect, the third information is carried in an RRC reconfiguration message.

The implementations of the fifth aspect correspond to the implementations of the fourth aspect. For details, refer to related descriptions in the fourth aspect. Details are not described again.

According to a sixth aspect, a cell handover method is provided. The method may be applied to a terminal device, for example, may be performed by the terminal device, or may be performed by a component (for example, a processor, a chip, or a chip system) configured in the terminal device, or may be implemented by a logical module or software that can implement all or some functions of the terminal device. This is not limited in this application.

The method includes: receiving third information from a first network device, where the third information indicates at least one candidate network device and at least one piece of QoS corresponding to the at least one candidate network device, and each of the at least one piece of QoS is QoS of a path bearer between a corresponding candidate network device and the first network device; and determining a target network device from the at least one candidate network device based on a service QoS requirement and the at least one piece of QoS.

Based on the foregoing solution, the terminal device may receive the at least one piece of QoS from the first network device, so that the terminal device can select a target network device from the candidate network devices based on the at least one piece of QoS and the service QoS requirement of the terminal device, to successfully hand over from the first network device to the target network device. This helps ensure the service QoS requirement of the terminal device and improve user experience of the terminal device.

With reference to the sixth aspect, in some implementations of the sixth aspect, the third information further indicates a validity period of at least one path, the at least one path corresponds to the at least one candidate network device, and a path corresponding to each candidate network device is used for communication with the first network device within a corresponding validity period.

With reference to the sixth aspect, in some implementations of the sixth aspect, the third information is carried in an RRC reconfiguration message.

The implementations of the sixth aspect correspond to the implementations of the fourth aspect. For details, refer to related descriptions in the fourth aspect. Details are not described again.

According to a seventh aspect, a cell handover method is provided. The method may be applied to a core network device. For example, the method may be performed by the core network device, or may be performed by a component (for example, a processor, a chip, or a chip system) configured in the core network device, or may be implemented by a logical module or software that can implement all or some functions of the core network device. This is not limited in this application.

The method includes: generating second information, where the second information indicates at least one piece of QoS, and each of the at least one piece of QoS is QoS of a path bearer between a first network device and one of at least one candidate network device; and sending the second information to the first network device.

Based on the foregoing solution, the core network device may send the at least one piece of QoS to the first network device, to subsequently assist the terminal device in determining a target network device subsequently.

With reference to the seventh aspect, in some implementations of the seventh aspect, the second information further indicates a validity period of at least one path, the at least one path corresponds to the at least one candidate network device, and a path corresponding to each candidate network device is used for communication with the first network device within a corresponding validity period.

The implementations of the seventh aspect correspond to the implementations of the fourth aspect. For details, refer to related descriptions in the fourth aspect. Details are not described again.

According to an eighth aspect, a cell handover method is provided. The method may be applied to a first network device, for example, may be performed by the first network device, or may be performed by a component (for example, a processor, a chip, or a chip system) configured in the first network device, or may be implemented by a logical module or software that can implement all or some functions of the first network device. This is not limited in this application.

The method includes: sending an early status transfer message to a second network device, where the early status transfer message is used to trigger the second network device to send a path switch request message, the path switch request message is used to request switching of a data transmission path between a terminal device and a core network device to the second network device, and the second network device is a candidate network device; and receiving a path switch request acknowledgment message from the core network device.

The terminal device is located within a signal coverage area of the first network device, or the first network device may provide a network service for the terminal device.

If the first network device needs to perform early data forwarding (early data forwarding) of the terminal device, the first network device may send an early status transfer message to the second network device. The early data forwarding is data forwarding performed in advance before the terminal device completes handover. Therefore, the early status transfer message sent by the first network device may be used to notify the second network device that the first network device sends a part of data of the terminal device to the second network device in advance, where the part of data may be data that is of the terminal device and that is not scheduled by the first network device. The part of data may also be understood as data that is not sent by the first network device to the terminal device and that needs to be sent by the second network device to the terminal device.

In response to the early status transfer message, the second network device may send the path switch request message to the core network device, to request switching of the data transmission path between the terminal device and the core network device to the second network device. In other words, the early status transfer message is used to trigger the second network device to send the path switch request message to the core network device, or trigger the second network device to request the core network device to switch the data transmission path between the terminal device and the core network device to the second network device.

Because the early status transfer message is sent when the first network device performs early data forwarding, and the early data forwarding is data forwarding performed before the terminal device completes handover, the path switch request message that is sent by the second network device in response to the early status transfer message is also a request sent before the terminal device completes the handover. In other words, the data transmission path between the terminal device and the core network device is switched in advance.

The first network device may determine one or more candidate network devices for the terminal device based on a measurement report reported by the terminal device. Therefore, the first network device may separately send an early status transfer message to the one or more candidate network devices, to trigger the one or more candidate network devices to send a path switch request message to the core network device.

Optionally, the path switch request message further indicates each candidate network device.

When the path switch request message indicates each candidate network device, the candidate network device may be indicated by using an identifier of the candidate network device or other information that can identify the candidate network device. This is not limited in this application. By indicating each candidate network device, the core network device determines a specific candidate network device to which the data transmission path between the terminal device and the core network device is switched.

According to the cell handover method in this embodiment of this application, when the first network device connected to the terminal device determines that the terminal device needs to be handed over but the terminal device has not been handed over, the first network device may send the early status transfer message to the second network device, to trigger the second network device to request the core network device to switch the data transmission path between the terminal device and the core network device, so that the data transmission path between the terminal device and the core network device is switched in advance. In this way, the switching of the data transmission path between the terminal device and the core network device, which is triggered by the early status transfer message, is performed in advance, thereby improving a handover success rate of the terminal device to the second network device.

With reference to the eighth aspect, in some implementations of the eighth aspect, the path switch request acknowledgment message carries a configuration and validity time of a second path, and the second path is a path that is established after the terminal device completes handover from the first network device to the second network device and that is used for communication between the first network device and the second network device.

The core network device sends the path switch request acknowledgment message to the second network device, so that the second network device forwards the path switch request acknowledgment message to the first network device.

The path switch request acknowledgment message may carry the configuration and a validity period of the second path, and the second path is the path that is established by the core network device after the terminal device completes the handover from the first network device to the second network device and that is used for communication between the first network device and the second network device.

The second path is a new path established for communication between the first network device and the second network device after an original path (for example, the first path) expires. Therefore, the first path may also be referred to as an original path, and the second path may also be referred to as a new path (path_new, P_new). The configuration of the second path may include specific path information of a path for communication between the first network device and the second network device, for example, identification information of the second path and/or each hop node on the second path.

In a possible case, there is no gap between the validity period of the new path and the validity period of the original path between the first network device and the second network device, or the validity period of the new path and the validity period of the original path between the first network device and the second network device overlap, for example, partially or completely overlap. In an overlapping time period, the first network device and the second network device may communicate with each other through both the new path and the original path. This manner of performing transmission through both the original path and the new path may be referred to as multipath coordinated transmission, which facilitates handover of the terminal device.

In another possible case, there may be a gap (gap) between the validity period of the second path (the new path) and the validity period of the original path. The gap may be used for preparation of the second path. In the gap, there is no available path between the first network device and the second network device, that is, communication cannot be performed.

According to a ninth aspect, a cell handover method is provided. The method may be applied to a second network device. The method may be applied to the second network device, for example, may be performed by the second network device, or may be performed by a component (for example, a processor, a chip, or a chip system) configured in the second network device, or may be implemented by a logical module or software that can implement all or some functions of the second network device. This is not limited in this application.

The method includes: receiving an early status transfer message from a first network device, where the early status transfer message is used to trigger the second network device to send a path switch request message, the path switch request message is used to request switching of a data transmission path between a terminal device and a core network device to the second network device, and the second network device is a candidate network device; and sending the path switch request message to the core network device based on the early status transfer message.

Based on the foregoing solution, the second network device may receive the early status transfer message from the first network device, to trigger the second network device to send the path switch request message to the core network device, so that the data transmission path between the terminal device and the core network device is switched in advance. In this way, the path switch request message triggered based on the early status transfer message is used to coordinate the multipath to assist handover of the terminal device, so that a handover success rate of the terminal device to the second network device can be improved.

With reference to the ninth aspect, in some implementations of the ninth aspect, a path switch request acknowledgment message from the core network device is received; and the path switch request acknowledgment message from the core network device is sent to the first network device.

The implementations of the ninth aspect correspond to the implementations of the eighth aspect. For details, refer to related descriptions in the eighth aspect. Details are not described again.

According to a tenth aspect, a cell handover method is provided. The method may be applied to a core network device. For example, the method may be performed by the core network device, or may be performed by a component (for example, a processor, a chip, or a chip system) configured in the core network device, or may be implemented by a logical module or software that can implement all or some functions of the core network device. This is not limited in this application.

The method includes: receiving a path switch request message from a second network device, where the second network device is one of at least one candidate network device, and the path switch request message is used to request switching of a data transmission path between a terminal device and the core network device to the second network device; and sending a path switch request acknowledgment message to a first network device.

Based on the foregoing solution, after receiving the path switch request message from the second network device, the core network device may send the path switch request acknowledgment message to the second network device. The path switch request message is directly sent by the second network device to the core network device, instead of being sent by the first network device to the core network device. In this way, the core network device can receive related information of a candidate network device more quickly, thereby improving a handover success rate of the terminal device to the second network device.

With reference to the tenth aspect, in some implementations of the tenth aspect, the path switch request acknowledgment message carries a configuration and validity time of a second path, and the second path is a path that is established after the terminal device completes handover from the first network device to the second network device and that is used for communication between the first network device and the second network device within the validity period.

The implementations of the tenth aspect correspond to the implementations of the eighth aspect. For details, refer to related descriptions in the eighth aspect. Details are not described again.

According to an eleventh aspect, a communication apparatus is provided, and may implement the cell handover method according to any one of the first aspect to the tenth aspect and the possible implementations of the first aspect to the tenth aspect. The apparatus includes one or more corresponding functional units or modules configured to perform the method. The functional units or modules included in the apparatus may be implemented by software and/or hardware.

According to a twelfth aspect, a communication apparatus is provided, including at least one processor, where the at least one processor is configured to perform the cell handover method according to any one of the first aspect to the tenth aspect and the possible implementations of the first aspect to the tenth aspect.

Optionally, the apparatus may further include a memory, configured to store instructions and data. The memory is coupled to the processor, and when executing the instructions stored in the memory, the processor may implement the method described in each aspect.

Optionally, the apparatus may further include a communication interface. The communication interface is used by the apparatus to communicate with another device. For example, the communication interface may be a transceiver, a circuit, a bus, a module, or another type of communication interface.

According to a thirteenth aspect, a chip system is provided. The chip system includes at least one processor, configured to support implementation of functions in any one of the first aspect to the tenth aspect and the possible implementations of the first aspect to the tenth aspect, for example, receiving or processing data and/or information in the foregoing methods.

In a possible design, the chip system further includes a memory, the memory is configured to store program instructions and data, and the memory is located inside or outside the processor.

In a possible design, the chip system further includes an interface circuit and/or a power supply circuit, the interface circuit is configured to transmit data, and the power supply circuit is configured to supply power to the chip system.

The chip system may include a chip, or may include a chip and another discrete component.

According to a fourteenth aspect, a communication system is provided. The communication system includes one or more of the first network device, the second network device, the terminal device, or the core network device.

According to a fifteenth aspect, a computer-readable storage medium is provided, including a computer program. When the computer program is run on a computer, the computer is enabled to implement the method according to any one of the first aspect to the tenth aspect and the possible implementations of the first aspect to the tenth aspect.

According to a sixteenth aspect, a computer program product is provided. The computer program product includes a computer program (which may also be referred to as code or instructions). When the computer program is run, a computer is enabled to perform the method according to any one of the first aspect to the tenth aspect and the possible implementations of the first aspect to the tenth aspect.

It should be understood that the technical solutions in the eleventh aspect to the sixteenth aspect of this application correspond to the technical solutions in the first aspect to the tenth aspect of this application, and beneficial effects achieved in the aspects and corresponding feasible implementations are similar. Details are not described again.

### BRIEF DESCRIPTION OF DRAWINGS

FIG. 1 is a diagram of a communication system according to an embodiment of this application;
FIG. 2A and FIG. 2B are diagrams of a steering system and a non-steering system in a communication system according to an embodiment of this application;
FIG. 3 is a diagram of group handover of terminal devices according to an embodiment of this application;
FIG. 4 is a diagram of Xn handover from a source network device to a target network device according to an embodiment of this application;
FIG. 5 is a schematic flowchart of a cell handover method according to an embodiment of this application;
FIG. 6 is another schematic flowchart of a cell handover method according to an embodiment of this application;
FIG. 7 is another schematic flowchart of a cell handover method according to an embodiment of this application;
FIG. 8 is another schematic flowchart of a cell handover method according to an embodiment of this application;
FIG. 9A and FIG. 9B are another schematic flowchart of a cell handover method according to an embodiment of this application;
FIG. 10A and FIG. 10B are another schematic flowchart of a cell handover method according to an embodiment of this application;
FIG. 11 is a block diagram of a communication apparatus according to an embodiment of this application; and
FIG. 12 is another block diagram of a communication apparatus according to an embodiment of this application.

### DESCRIPTION OF EMBODIMENTS

The following describes technical solutions of this application with reference to the accompanying drawings.

Embodiments of this application may be applied to non-terrestrial network (non-terrestrial network, NTN) systems such as satellite communication systems, high-altitude platform station (high-altitude platform station, HAPS) communication systems, and uncrewed aerial vehicle systems, for example, an integrated communication and navigation (integrated communication and navigation, IcaN) system, a global navigation satellite system (global navigation satellite system, GNSS), and an ultra-dense low earth orbit satellite communication system. The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future communication network, or the like.

The technical solutions in embodiments of this application may be further applied to various communication systems based on non-orthogonal multiple access technologies, for example, a sparse code multiple access (sparse code multiple access, SCMA) system. Certainly, SCMA may also be referred to as another name in the communication field. Further, the technical solutions of embodiments of this application may be applied to multi-carrier transmission systems using the non-orthogonal multiple access technologies, for example, orthogonal frequency division multiplexing (orthogonal frequency division multiplexing, OFDM), filter bank multi-carrier (filter bank multi-carrier, FBMC), generalized frequency division multiplexing (generalized frequency division multiplexing, GFDM), and filtered orthogonal frequency division multiplexing (filtered-OFDM, F-OFDM) systems using the non-orthogonal multiple access technologies.

Embodiments of this application may be further applied to a system like an open access network (open RAN, O-RAN, or ORAN), a cloud radio access network (cloud radio access network, CRAN), or a virtualized radio access network (virtualized RAN, vRAN), or a communication system integrating two or more of the foregoing systems.

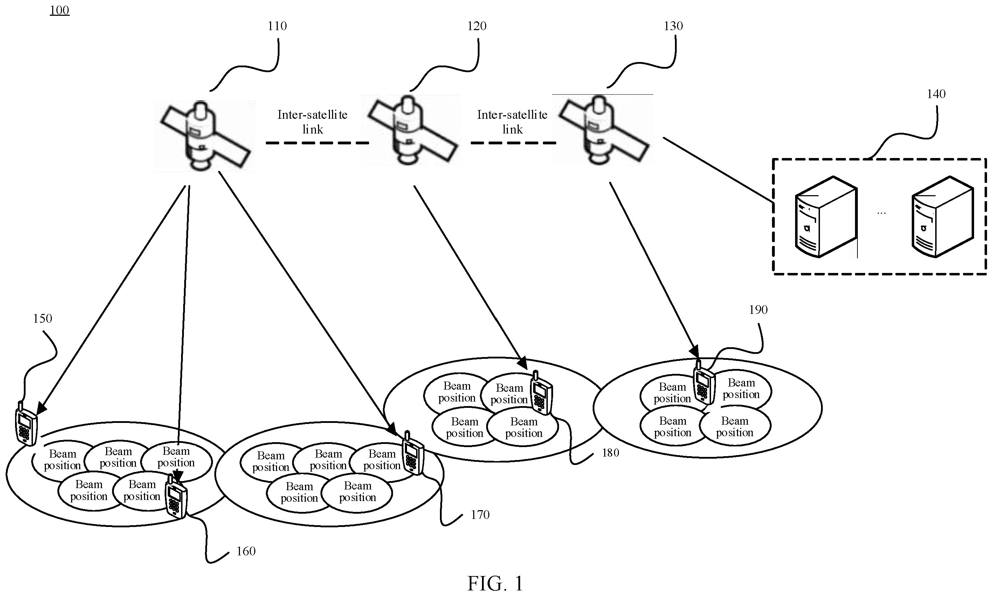

FIG. 1 is a diagram of a communication system 100 to which embodiments of this application are applied. As shown in FIG. 1, the communication system 100 includes a satellite 110, a satellite 120, a satellite 130, a core network device 140, a terminal device 150, a terminal device 160, a terminal device 170, a terminal device 180, and a terminal device 190.

A network side includes the satellite 110, the satellite 120, the satellite 130, and the core network device 140. A terminal device may be connected to the satellite 110, the satellite 120, or the satellite 130 in a wireless or wired manner. For example, the terminal device 150, the terminal device 160, and the terminal device 170 are within a coverage area of the satellite 110, and may be connected to the satellite 110 in a wireless manner. The terminal device 180 is within a coverage area of the satellite 120, and may be connected to the satellite 120 in a wireless manner. The terminal device 190 is within a coverage area of the satellite 130, and may be connected to the satellite 130 in a wireless manner. A service area of a satellite network may be divided into a plurality of small geographical areas based on geographical locations, and each geographical area is referred to as a beam position. The beam positions may be represented by using different shapes, for example, represented by using ellipses in FIG. 1.

It should be understood that each satellite (the satellite 110, the satellite 120, and the satellite 130) in the satellite communication system may provide a communication service, a navigation service, a positioning service, and the like for the terminal device by using a plurality of beams. In this scenario, the satellite is a low earth orbit (low earth orbit, LEO) satellite. The satellite uses a plurality of beams to cover a service area, and different beams may be used to perform communication in one or more manners of time division, frequency division, and space division. The satellite performs wireless communication with the terminal device by using a broadcast communication signal, a navigation signal, and the like. The satellite may perform wireless communication with the core network device.

The satellite mentioned in embodiments of this application may be a satellite base station, or may be an orbit receiver or a repeater configured to relay information, or may be a network side device mounted on the satellite.

It should be understood that the satellite communication system includes a transparent satellite architecture and a non-transparent satellite architecture. Transparent transmission is also referred to as bent-pipe forwarding transmission. To be specific, only processes such as frequency conversion and signal amplification are performed on a signal on a satellite, and the satellite is transparent to the signal as if the satellite does not exist. Non-transparent transmission is also referred to as regenerative (on-satellite access/processing) transmission. To be specific, a satellite has a part or all of functions of a base station. For example, the satellite 110 and the satellite 120 in FIG. 1 are of a non-transparent satellite architecture, and the satellite 130 is of a transparent satellite architecture.

It should be understood that the core network device 150 may be an access and mobility management function (access and mobility management function, AMF) network element, which is mainly configured to perform mobility management, access management, and the like and may be configured to implement a function, for example, a lawful interception function or an access authorization (or authentication) function, other than session management in mobility management entity (mobility management entity, MME) functions, or may be a user plane function (user plane function, UPF) network element, where the UPF is a user plane function and is responsible for forwarding user data. Alternatively, the core network device may have another name. This is not limited in embodiments of this application.

It should be understood that a plurality of antennas may be configured for the network device or the terminal device. The plurality of antennas may include at least one transmit antenna configured to send a signal and at least one receive antenna configured to receive a signal. In addition, the network device or the terminal device further additionally includes a transmitter chain and a receiver chain. A person of ordinary skill in the art may understand that the transmitter chain and the receiver chain may each include a plurality of components (for example, a processor, a modulator, a multiplexer, a demodulator, a demultiplexer, or an antenna) related to signal sending and receiving. Therefore, the network device may communicate with the terminal device by using a multi-antenna technology.

It should be understood that the communication system shown in FIG. 1 is merely a diagram. The communication system may further include another terminal device and another network device, for example, a wireless relay device and a wireless backhaul device, which are not shown in FIG. 1. Quantities of network devices and terminal devices included in the communication system are not limited in embodiments of this application.

In embodiments of this application, the network device may be any device having a wireless transceiver function. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G system like an NR system, may be one antenna panel or a group (including a plurality of antenna panels) of antenna panels of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU may be responsible for processing a non-real-time protocol and service, for example, may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing a physical layer protocol and a real-time service. For example, the DU may implement functions of a radio link control (radio link control, RLC) layer, a medium access control (medium access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU may implement a part of physical layer processing functions, radio frequency processing, and a function related to an active antenna. Information at the RRC layer is eventually submitted to the PHY layer and then is converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In different systems, the CU (or the CU-CP and the CU-UP), the DU, or the RU may also have different names, but a person skilled in the art may understand meanings thereof. For example, in an O-RAN system, the CU may also be referred to as an O-CU (open CU), the DU may also be referred to as an O-DU (open DU), the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

Any one of the CU (or the CU-CP or the CU-UP), the DU, and the RU in this application may be implemented by using a software module, a hardware module, or a combination of a software module and a hardware module.

The network device provides a service for a cell, and the terminal device communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have characteristics of a small coverage area and a low transmit power, and are applicable to providing a high-rate data transmission service.

In embodiments of this application, a terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device with a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of the user. The wearable device is not only a hardware device, but also implements a powerful function through software support, data exchange, and cloud interaction. Generalized wearable intelligent devices include full-featured and large-size devices that can implement all or some functions without depending on smartphones, for example, smartwatches or smart glasses, and devices that focus on only one type of application function and need to work with other devices such as smartphones, for example, various smart bands or smart jewelry for monitoring physical signs.

In addition, the terminal device may alternatively be a terminal device in an internet of things (internet of things, IoT) system. The IoT is an important part in future development of information technologies. A main technical feature of the IoT is to connect things to a network by using a communication technology, to implement an intelligent network for human-machine interconnection and thing-thing interconnection. IoT technologies can achieve massive connections, intensive coverage, and power saving for terminals by using, for example, a narrowband (narrowband, NB) technology.

In addition, the terminal device may alternatively include sensors such as an intelligent printer, a train detector, and a gas station, and main functions include: collecting data (which is a function of some terminal devices), receiving control information and downlink data of the network device, sending an electromagnetic wave, and transmitting uplink data to the network device.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing by using a process (process). The application layer includes applications such as a browser, contacts, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

For ease of understanding, the following first describes terms used in embodiments of this application.

### 1. Non-terrestrial network (non-terrestrial network, NTN)

The NTN includes nodes such as a satellite network, a high-altitude platform station, and an uncrewed aerial vehicle, offers significant advantages such as global coverage, long-distance transmission, flexible networking, easy deployment, and geographical condition independence, and has been widely applied in fields such as maritime communication, positioning and navigation, disaster relief, scientific experiments, video broadcasting, and earth observation. A terrestrial 5G network and a satellite network complement each other and are integrated to form a space-air-ground-sea integrated communication network that provides seamless global coverage, thereby meeting diverse ubiquitous service requirements of users.

As an important part of the NTN, the next-generation satellite network generally has a trend of being ultra dense and heterogeneous. First, a scale of the satellite network has expanded from 66 satellites in the Iridium constellation to 720 satellites in the OneWeb constellation, and finally to over 12,000 satellites in the Starlink (starlink) ultra-dense LEO satellite constellation. Second, the satellite network has a heterogeneous characteristic, evolving from a conventional single-layer communication network to a multi-layer communication network; and a communication satellite network tends to have complex and diversified functions, and is gradually compatible with and supports functions of navigation enhancement, earth observation, on-orbit processing of multidimensional information, and the like.

### 2. Satellite communication system

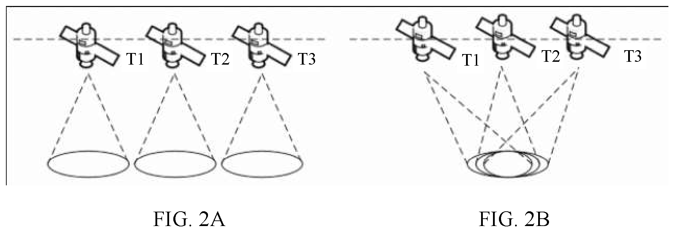

Usually, satellite communication systems can be classified into steering satellite communication systems (steering systems for short) and non-steering satellite communication systems (non-steering systems for short) based on operating modes of payloads (for example, beams). A steering system means that within a period of time, a satellite dynamically adjusts the beam direction, so that the beam approximately covers a same area on the ground. For example, as shown in FIG. 2A, within time T1, time T2, and time T3, a beam coverage area of a satellite moves together with the satellite. A non-steering system means that within a period of time, the beam coverage area of a satellite moves together with the satellite. For example, as shown in FIG. 2B, within time T1, time T2, and time T3, a satellite dynamically adjusts the beam direction, so that the beam approximately covers a same area on the ground within the time T1, the time T2, and the time T3. The steering system may include an earth-fixed mode or a quasi-earth-fixed mode. The non-steering system may include an earth-moving mode.

### 3. Mobility management

### (1) Mobility management problem

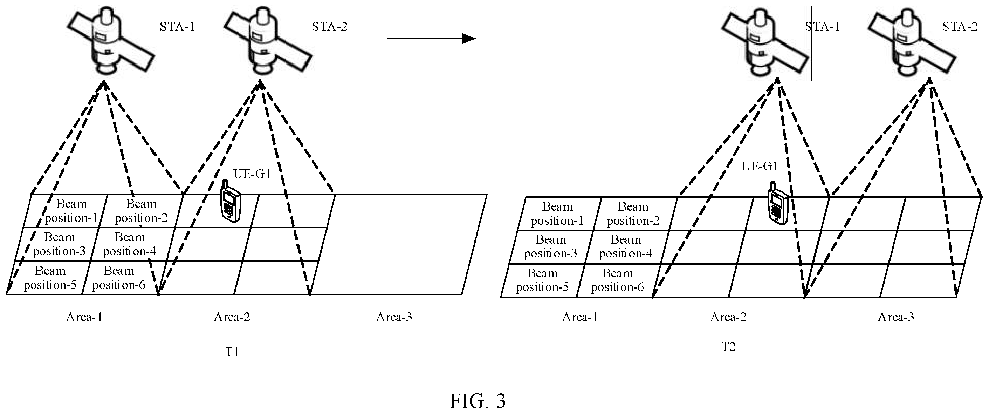

In satellite communication systems (especially in earth-fixed scenarios), movement of a satellite node may cause group handover or group reselection problems for terminal devices in a beam position in a specific area. FIG. 3 shows group handover of a UE cluster within a period of time. An area-1 includes a beam position 1, a beam position 2, a beam position 3, a beam position 4, a beam position 5, and a beam position 6. An area-2 and an area-3 may also include six beam positions. Details are not described again. The beam positions may be represented by using different shapes, for example, represented by using parallelograms in FIG. 3. There is a UE cluster (namely, user equipment-group1, UE-G1) in a single beam position in the area-2, and the UE-G1 includes a plurality of UEs. At time T1, the UE-G1 is served by one or more beams of a satellite-2 (satellite-2, SAT-2). At time T2, the beam position cannot be served due to movement of the SAT-2, and one or more beams of a satellite-1 (satellite-1, SAT-1) take over to serve the UE-G1. Therefore, group handover occurs on the UE-G1. In addition, because the satellite moves at a high speed of about 7.5 km/s, a frequency of group handover is about once every few to several tens of seconds. In other words, in beam hopping LEO satellite network, group handover mainly triggered by network mobility becomes a normal phenomenon.

### (2) Mobility management method

Mobility management mainly includes intra-satellite cell handover, intra-satellite cell reselection, inter-satellite cell handover, inter-satellite cell reselection, registration update, tracking area update, and the like. Cell handover (including the intra-satellite cell handover and the inter-satellite cell handover) is used as an example. A handover procedure of a terrestrial network mainly includes the following steps:
Step 1: cell handover measurement, where generally, a network device delivers measurement configurations corresponding to a plurality of cells (including a serving cell and a neighboring cell) to a terminal device, the terminal device measures cell signal quality (such as reference signal received power (reference signal received power, RSRP) and/or reference signal received quality (reference signal received quality, RSRQ)) based on the measurement configurations;
Step 2: measurement result reporting, where the terminal device reports a measurement result to the network device, a reporting manner may be periodic reporting or event-triggered reporting, and during event-triggered reporting, a reporting condition is usually configured as follows: signal quality of the serving cell is lower than a threshold 1 and/or signal quality of the neighboring cell is higher than a threshold 2;
Step 3: handover decision, where the network device selects an appropriate neighboring cell based on the reported result and exchanges user handover-related information such as context information, admission control, and reserved resources; and
Step 4: handover execution, where the terminal device receives handover-related control information from the serving cell and completes an access procedure in a new cell.

When the terminal device is handed over, a random access preamble required by the terminal device is a dedicated preamble reserved by the network device, and is different from a contention-based random access preamble used during initial access. In addition, a configuration supported by a time domain periodicity of a random access channel (random access channel, RACH) during the handover is 10/20/40/80/160 milliseconds (ms), which is the same as a configuration of a periodicity of the RACH during the initial access. It should be noted that, in the handover process, data of the terminal device usually needs to be transferred from a source network device to a target network device, to ensure throughput experience of the terminal device.

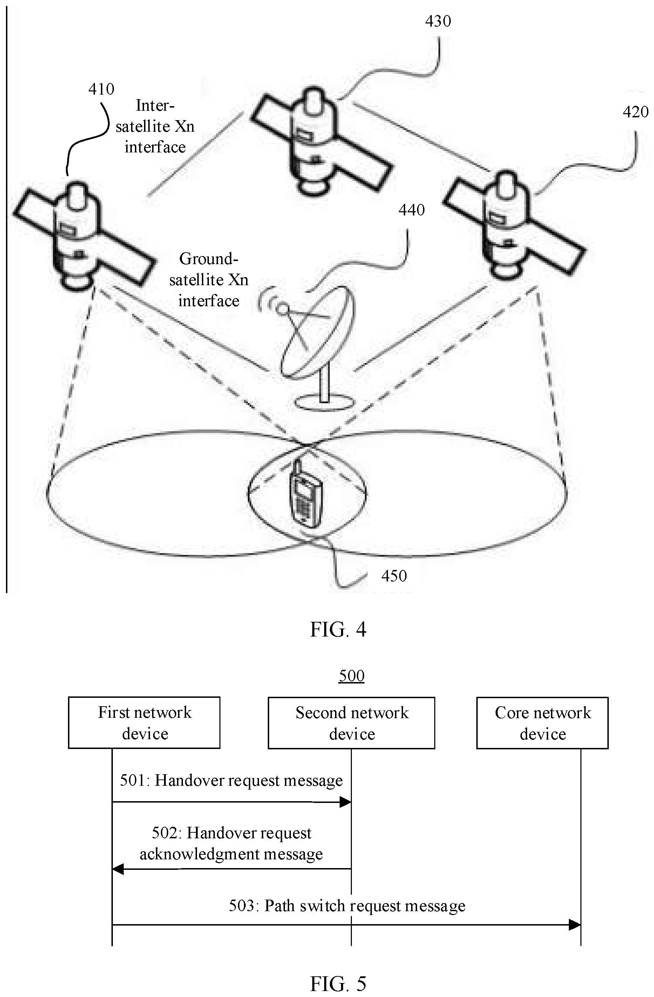

Currently, handover or reselection in an NTN is usually designed for and occurs in transparent (transparent) satellite scenarios. However, in regenerative (regenerative) satellite scenarios, handover between different satellites may pass through long inter-satellite links (inter-satellite links, ISLs) and/or ground-satellite links (ground-satellite links, GSLs). Due to the dynamic nature of satellite topology, ISL and/or GSL transmission may suffer intermittent connectivity, which may increase end-to-end transmission latency, and may even cause handover failures of terminal devices. For example, FIG. 4 is a diagram of Xn handover from a source (source) network device 410 to a target (target) network device 420. It can be learned that the source network device 410 communicates with the target network device 420 via one or more relays 430, and the source network device 410, the relays 430, and the target network device 420 are all network devices deployed on satellites. Due to the mobility of the satellite, an Xn interface between the network devices may be interrupted. Therefore, intermittent connectivity may occur in ISL transmission among the source network device 410, the relays 430, and the target network device 420, which may cause an increase in a message transmission latency, and even may cause a handover failure of the terminal device 450. Intermittent connectivity may also occur in GSL transmission among the source network device 410, a terrestrial station 440, and the target network device 420, which may cause an increase in a message transmission latency, and even may cause a handover failure of the terminal device 450.

In view of this, this application provides a cell handover method. When a network device (for example, denoted as a first network device) determines that a terminal device needs to be handed over but the terminal device has not been handed over, the network device may request a core network device to hand over a data transmission path between the terminal device and the core network device, to switch the data transmission path from the first network device to one or more candidate network devices, and does not need to wait until the terminal device completes handover from a source network device to a target network device, to switch the data transmission path between the terminal device and the core network device. In this way, the data transmission path between the terminal device and the core network device can be switched in advance. In general, time of handover (including handover of the terminal device on an access side and switching of the data transmission path between the terminal device and the core network device) can be shortened, thereby alleviating handover failures caused by intermittent connectivity of ISL or GSL transmission, and improving a handover success rate of the terminal device to the target network device.

For ease of understanding embodiments of this application, the following descriptions are provided first.

First, to clearly describe the technical solutions in embodiments of this application, terms such as "first" and "second" are used in embodiments of this application to distinguish between same items or similar items that provide basically same functions and purposes. For example, first information and second information are merely intended to distinguish between time domain-based and frequency domain-based phase offsets, and do not limit a sequence of the first information and the second information and an amount of signaling. A person skilled in the art may understand that the terms such as "first" and "second" do not limit a quantity or an execution sequence, and the terms such as "first" and "second" do not indicate a definite difference.

Second, "sending" and "receiving" in embodiments of this application indicate signal transfer directions. Communication between different devices may refer to direct communication between the different devices (that is, no other device is required for transiting or forwarding), or may refer to communication between the different devices via another device (that is, another device is required for transiting or forwarding), or may refer to communication between a functional unit inside a device and another device via another functional unit. In other words, "sending information to the first network device" in this application may be understood as that a destination end of the information is the first network device, and may include directly or indirectly sending the information to the first network device. "Receiving information via the core network device" may be understood as that a source end of first information is the core network device. "Receiving information from the core network device" may be understood as that a source end of first information is the core network device, and may include directly or indirectly receiving the information via the core network device. Necessary processing, for example, format change or digital-to-analog conversion, may be performed on information between an information sending source end and an information sending destination end, but the destination end may understand valid information from the source end. A similar expression in this application may be understood similarly, and details are not described herein again.

Third, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in embodiments of this application, both "when" and "if" mean that an apparatus performs corresponding processing in an objective case, are not intended to limit time, do not require the apparatus to necessarily have a determining action during implementation, and do not mean any other limitation.

The following describes in detail a cell handover method and a communication apparatus provided in this application with reference to the accompanying drawings. It should be understood that the technical solutions of this application may be applied to a wireless communication system, for example, the communication system 100 shown in FIG. 1. There may be a wireless communication connection relationship between communication devices in the wireless communication system. The communication device may correspond to the terminal device shown in FIG. 1. For example, the communication device may be the terminal device shown in FIG. 1, or may be a chip configured in the terminal device. The communication device may correspond to the network device shown in FIG. 1. For example, the communication device may be the network device shown in FIG. 1, or may be a chip configured in the network device. The communication device may correspond to the core network device shown in FIG. 1. For example, the communication device may be the core network device shown in FIG. 1, or may be a chip configured in the core network device.

The following describes the method provided in this application by using a plurality of accompanying drawings. In the following embodiments shown in the accompanying drawings, an interaction process between a first network device, a second network device, a terminal device, and a core network device is used as an example to describe each procedure. The first network device is a source network device for cell handover, the second network device is a candidate network device for cell handover, and a third network device is a target network device for cell handover. It should be understood that there may be one or more candidate network devices, and the second network device may be any one of the one or more candidate network devices. The following embodiments shown in the accompanying drawings may be applied to the communication system shown in FIG. 1, or may be applied to another communication system. This is not limited.

FIG. 5 shows a cell handover method 500 according to an embodiment of this application. The method 500 may be applied to inter-satellite cell handover. The method 500 shown in FIG. 5 includes steps 501 to 503. The following describes the steps in the method 500 in detail.

In step 501, a first network device sends a handover request message (HO request message) to a second network device, where the handover request message is used to request handover of a terminal device to the second network device. Correspondingly, the second network device receives the handover request message from the first network device.

The terminal device is located within a signal coverage area of the first network device, or the first network device may provide a network service for the terminal device.

When determining, based on a measurement report reported by the terminal device, that the terminal device needs to be handed over to a network device, the first network device may determine a candidate network device for the terminal device. As described above, there may be one or more candidate network devices. The first network device may send a handover request message to each of the one or more candidate network devices (including the second network device), to request handover of the terminal device to a candidate network device.

In step 502, the first network device receives a handover request acknowledgment message from the second network device. Correspondingly, the second network device sends the handover request acknowledgment message to the first network device.

Each candidate network device that receives the handover request message may send a handover request acknowledgment message to the first network device when determining to agree to handover of the terminal device. In this specification, it is assumed that the second network device agrees to the handover of the terminal device, and sends the handover request acknowledgment message to the first network device.

After confirming agreement to the handover of the terminal device, the second network device may perform admission control, and may reserve a cell-radio network temporary identifier (cell-radio network temporary identifier, C-RNTI), a preamble (preamble), a random access channel occasion (random access channel occasion, RO), a time-frequency resource, and the like required for the handover.

In step 503, the first network device sends a path switch request message (Path Switch Request message) to a core network device, where the path switch request message is used to request switching of a data transmission path between the terminal device and the core network device to the second network device. Correspondingly, the core network device receives the path switch request message from the first network device.

As described above, there may be one or more candidate network devices. Therefore, the path switch request message may be used to request switching of a data transmission path between the terminal device and the core network device to the one or more candidate network devices.

Switching the data transmission path between the terminal device and the core network device to the candidate network device is, in other words, switching a data transmission path that is originally used by the terminal device to perform data transmission with the core network device through the first network device to a data transmission path that is used by the terminal device to perform data transmission with the core network device through the candidate network device, or switching the data transmission path between the terminal device and the core network device from the first network device to the candidate network device.

It is not difficult to learn that the path switch request message sent by the first network device to the core network device is sent after the first network device determines a candidate network device that agrees to perform the handover. In other words, the data transmission path between the terminal device and the core network device can be switched before the terminal device determines a target network device from the candidate network devices and completes the handover from the first network device to the target network device.

Optionally, the path switch request message indicates the second network device.

For example, the path switch request message may carry an identifier of the second network device, to indicate the second network device by using the identifier. Alternatively, the path switch request message may carry other information that can identify the second network device. This is not limited in this application.

As described above, there may be one or more candidate network devices. The path switch request message may further indicate the one or more candidate network devices, and the one or more candidate network devices include the second network device.

By indicating the one or more candidate network devices, the core network device may determine a specific network device to which the data transmission path between the terminal device and the core network device is switched.

Based on the foregoing solution, when the first network device determines that the terminal device needs to be handed over but the terminal device has not been handed over, the first network device may determine a candidate network device (including the second network device) for the terminal device, and request the core network device to switch the data transmission path between the terminal device and the core network device, to switch the data transmission path from the first network device to the candidate network device (for example, the second network device), and does not need to wait until the terminal device completes the handover from a source network device (namely, the first network device) to the target network device, to switch the data transmission path between the terminal device and the core network device. In this way, the data transmission path between the terminal device and the core network device can be switched in advance. In general, time of handover (including handover of the terminal device on an access side and switching of the data transmission path between the terminal device and the core network device) can be shortened, thereby alleviating handover failures caused by intermittent connectivity of ISL or GSL transmission, and improving a handover success rate of the terminal device to the second network device.

Optionally, before step 501, the method further includes: The first network device receives first information from the core network device, where the first information indicates a validity period of a first path. Correspondingly, the core network device sends the first information to the first network device.

The first path is a path for communication between the first network device and the second network device through an Xn interface, and the first path may be used to exchange data of the terminal device between the first network device and the second network device.

The first path is used for communication between the first network device and the second network device within the validity period. In other words, within the validity period, the first network device and the second network device may communicate with each other through the first path, and after the validity period ends, the first network device and the second network device usually cannot communicate with each other through the first path. In other words, the first path usually expires after the validity period ends, and an end time of the validity period may be understood as an expiration time of the first path. The validity period may also be referred to as an effective time period, validity time, or the like. This is not limited.

In this embodiment, the first network device may determine a candidate network device for the terminal device within the validity period of the first path, and request the core network device to switch the data transmission path between the terminal device and the core network device. In other words, the validity period may be used by the first network device to control that time for sending the path switch request message to the core network device is not later than the expiration time of the first path.

For example, a possible implementation in which the first information indicates the validity period of the first path is that the first information indicates at least two of a start time, the end time, or a time length of the first path.

In an optional embodiment, after step 503, the method further includes: The core network device sends a path switch request acknowledgment message (Path Switch Request message ACK) to the first network device. Correspondingly, the first network device receives the path switch request acknowledgment message from the core network device.

A possible implementation of step 503 is that the core network device sends a path switch request acknowledgment message to the second network device, so that the second network device forwards the path switch request acknowledgment message to the first network device.

Optionally, the path switch request acknowledgment message indicates an expiration time of the first path between the first network device and the second network device.

In other words, the expiration time of the first path is related to the validity period of the first path. The expiration time may be, for example, the end time of the validity period. Before the expiration time of the first path arrives, the first network device and the second network device may exchange the data of the terminal device through the first path. After the expiration time of the first path arrives, the first network device stops exchanging data of the terminal device through the first path.

In an optional embodiment, the method further includes: The first network device releases context of the terminal device based on time information after the terminal device completes handover, where the time information indicates a time at which the first network device releases the context of the terminal device.

The time at which the first network device releases the context of the terminal device and that is indicated by the time information may be related to the validity period of the first path. For example, the time may be the end time of the validity period, or time near the end time of the validity period. Therefore, that the first network device releases the context of the terminal device based on the time information after the terminal device completes the handover may also be replaced with that the first network device releases the context of the terminal device based on the validity period of the first path. In other words, the first network device may automatically release the context of the terminal device within the validity period of the first path. In addition, because the validity period of the first path corresponds to the expiration time of the first path, that the first network device automatically releases the context of the terminal device based on the time information after the terminal device completes the handover may also be replaced with that the first network device automatically releases the context of the terminal device based on the expiration time of the first path. The first network device may automatically release the context of the terminal device before the first path expires, or in other words, the time at which the first network device automatically releases the context of the terminal device is not later than the expiration time of the first path.

Optionally, the path switch request message sent by the first network device to the core network device carries the time information.

Certainly, if the first network device releases the context of the terminal device based on the validity period of the first path, it may be considered that the core network device knows in advance a time at which the first network device releases the context of the terminal device. In this case, the path switch request message may not need to carry the time information via the first network device.

After completing the handover from the source network device to the target network device, the terminal device may send a sequence number SN status report to the target network device. The SN status report may include an SN number of a last data packet received by the terminal device before the terminal device is handed over from a source network device to a target network device. Based on the SN number, the target network device may determine a next data packet that needs to be transmitted, so that the target network device can transmit, in a timely manner after the handover, a data packet that is not scheduled by the source network device, to ensure service continuity.

In this embodiment, the source network device is the first network device, and the target network device is a third network device. It may be understood that the third network device is one of the one or more candidate network devices. Therefore, the third network device and the second network device may be a same network device, or may be different network devices. Optionally, the method further includes: The terminal device sends the SN status report to the third network device. Correspondingly, the third network device receives the user data packet related sequence number SN status report from the terminal device.

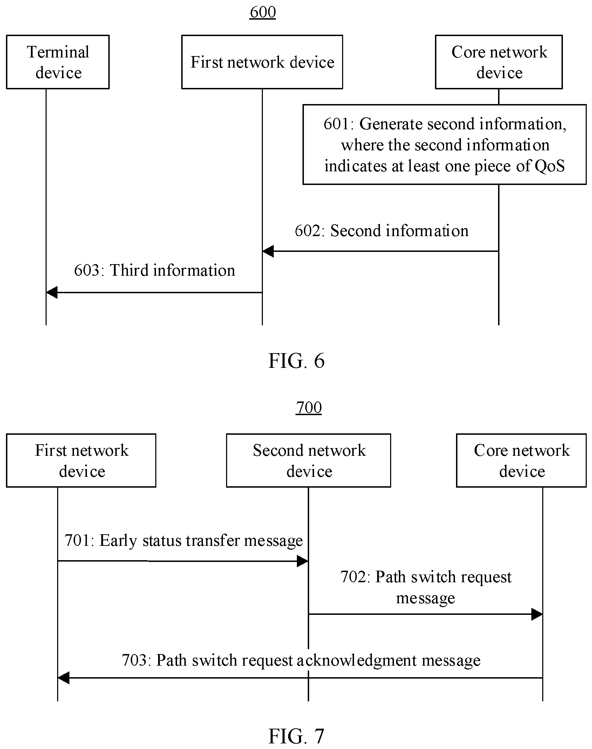

FIG. 6 shows a cell handover method 600 according to another embodiment of this application. The method 600 may be applied to inter-satellite cell handover. The method 600 shown in FIG. 6 includes steps 601 to 603. The following describes the steps in the method 600 in detail.

In step 601, a core network device generates second information, where the second information indicates at least one piece of QoS, and each of the at least one piece of QoS is QoS of a path bearer between a first network device and one of at least one candidate network device.

The path bearer between the first network device and the candidate network device may be understood as a channel used for communication between the first network device and the candidate network device. The channel may be used for data exchange between the first network device and the candidate network device, for example, data exchange of a terminal device. The path bearer may also be referred to as a path, a channel, a bearer, or the like for short. Because network devices may communicate with each other through an Xn interface, the path bearer may also be referred to as an Xn bearer, an Xn interface, an Xn interface path, or the like. The QoS of the path bearer may also be referred to as QoS of the Xn bearer or QoS of the bearer, and may be understood as QoS that can be provided by the channel.

It should be noted that this solution is also applicable to a scenario in which network devices communicate with each other through an F1 interface, an E1 interface, an NG interface, or another interface. The F1 interface is an interface between a CU and a DU, the E1 interface is an interface between CUs, and the NG interface is an interface between a radio access network and a core network. When the foregoing solution is applied to the F1 interface, the E1 interface, the NG interface, or another interface, the at least one piece of QoS may be QoS of an interface bearer corresponding to the at least one candidate network device.

It should be understood that the path between the first network device and each of the at least one candidate network device may be a path passing through the Xn interface. In other words, the at least one piece of QoS may include QoS of an Xn bearer between the first network device and each of the at least one candidate network device.

It may be understood that, because there may be a plurality of candidate network devices, the at least one piece of QoS may be a plurality of pieces of QoS. In this case, the plurality of pieces of QoS may be the same or may be different. This is not limited in this application.

In this embodiment, the at least one candidate network device may include a second network device. Therefore, the at least one piece of QoS includes QoS of a path bearer between the first network device and the second network device. In other words, the second information may indicate the QoS of the path bearer (or an Xn bearer) between the first network device and the second network device.

The QoS of the path bearer may be related to service QoS requirements (QoS requirements) of the terminal device. For example, the core network device (for example, an AMF) may map the service QoS requirements of the terminal device to a service level of the QoS of the Xn bearer (for example, a QoS class identifier (QoS class identifier, QCI) and an allocation and retention priority (allocation and retention priority)). The service level may include at least one of a latency, a packet loss rate, reliability, or throughput.

Optionally, the second information further indicates a validity period of at least one path, the at least one path corresponds to the at least one candidate network device, and a path corresponding to each candidate network device is used for communication with the first network device within a corresponding validity period.

The second network device is used as an example. A path corresponding to the second network device is a path for communication between the first network device and the second network device. The path corresponding to the second network device may be used for communication with the first network device within a validity period corresponding to the second network device. For more detailed descriptions of the validity period of the path, refer to related descriptions in the method 500. Details are not described again.

In this embodiment, because there may be a plurality of candidate network devices, there may be a plurality of paths between the first network device and the candidate network devices. In this case, validity periods of the plurality of paths may be the same or may be different. This is not limited in this application.

In step 602, the core network device sends the second information to the first network device. Correspondingly, the first network device receives the second information from the core network device.

Optionally, the second information is mobility control information (mobility control information), or is an information element carried in mobility control information. This is not limited in this application.

In addition to the at least one piece of QoS and the validity period of the at least one path, the mobility control information may further include access restrictions, roaming information, and the like of the terminal device. This is not limited.

In step 603, the first network device sends third information to the terminal device, where the third information indicates the at least one piece of QoS. Correspondingly, the terminal device receives the third information from the first network device.

The terminal device is located within a signal coverage area of the first network device, or the first network device may provide a network service for the terminal device.

Content indicated by the third information corresponds to the second information. For example, the second information indicates the at least one piece of QoS, and the third information also indicates the at least one piece of QoS. For more detailed content of the at least one piece of QoS, refer to related descriptions in step 601. Details are not described again.

The first network device may directly forward the received second information to the terminal device. In this case, the second information is the same as the third information. Alternatively, the first network device may generate the third information based on the second information and send the third information to the terminal device. For example, the first network device obtains at least one piece of QoS in the second information through parsing, and then generates the third information to indicate the at least one piece of QoS. Alternatively, the first network device may process the received second information to obtain the third information, and then send the third information to the terminal device. This is not limited in this application.

Optionally, the third information further indicates the validity period of the at least one path.

For more detailed content about the at least one path and the validity period, refer to related descriptions in step 601. Details are not described again. It may be understood that, when the second information indicates the validity period of the at least one path, the third information may also indicate the validity period of the at least one path.

Optionally, the third information further indicates the at least one candidate network device.

For example, the third information may indicate the at least one candidate network device by configuring at least one candidate cell. The at least one candidate cell may be a serving cell of the at least one candidate network device, and each candidate network device may provide a service for one or more candidate cells.

Optionally, the third information is carried in an RRC reconfiguration message.

The RRC reconfiguration message further includes a configuration of a candidate cell and a handover execution condition of the terminal device. The handover execution condition may be related to at least one of a location, time, or signal quality of the candidate cell.

Optionally, after step 602, the method further includes: the terminal device determines a target network device from the at least one candidate network device based on the service QoS requirement and the third information.

In this embodiment, the first network device needs to select, from the at least one path within the validity period of the at least one path corresponding to the at least one candidate network device, a path that is more closely related to the service QoS requirement of the terminal device, and use a candidate network device corresponding to the path as the target network device. Optionally, the method further includes: handing over the terminal device from the source network device to the target network device.

In this embodiment, the source network device is the first network device, and the target network device may be one of the at least one candidate network device, for example, a third network device. Therefore, the handover from the source network device to the target network device may also be referred to as handover from the first network device to the third network device. It should be understood that the third network device may be the second network device, or may not be the second network device. This is not limited.

As described above, the third information further indicates the validity period corresponding to the at least one candidate network device. When determining that the target network device is the third network device, the terminal device may complete the handover from the first network device to the third network device based on the validity period of the path between the third network device and the first network device. For example, an execution time of the handover of the terminal device from the first network device to the third network device is not later than an expiration time of the path.

Based on the foregoing solution, a network side may indicate, to the terminal device, QoS of a path bearer between the first network device and each of the at least one candidate network device, so that the terminal device can consider a service QoS requirement when selecting a target network device. In other words, handover of the terminal device can be assisted, thereby helping ensure the service QoS requirement of the terminal device and improving user experience of the terminal device. In addition, the network side may further indicate, to the terminal device, a validity period of at least one path corresponding to the at least one candidate network device, so that the terminal device performs handover based on the validity period. This helps avoid a handover failure caused by path failure, and can improve a handover success rate of the terminal device.

FIG. 7 shows a cell handover method 700 according to another embodiment of this application. The method 700 may be applied to inter-satellite cell handover. The method 700 shown in FIG. 7 includes step 701 and step 702. The following describes the steps in the method 700 in detail.

In step 701, a first network device sends an early status transfer message (EARLY STATUS TRANSFER message) to a second network device, where the early status transfer message is used to trigger the second network device to send a path switch request message, the path switch request message is used to request switching of a data transmission path between a terminal device and a core network device to the second network device, and the second network device is a candidate network device. Correspondingly, the second network device receives the early status transfer message from the first network device.

The terminal device is located within a signal coverage area of the first network device, or the first network device may provide a network service for the terminal device.

In this embodiment, if the first network device needs to perform early data forwarding (early data forwarding) of the terminal device, the first network device may send an early status transfer message to the second network device. The early data forwarding is data forwarding performed in advance before the terminal device completes handover. Therefore, the early status transfer message sent by the first network device may be used to notify the second network device that the first network device sends a part of data of the terminal device to the second network device in advance, where the part of data may be data that is of the terminal device and that is not scheduled by the first network device. The part of data may also be understood as data that is not sent by the first network device to the terminal device and that needs to be sent by the second network device to the terminal device.

In step 702, the second network device sends the path switch request message to the core network device.

In this embodiment, in response to the early status transfer message, the second network device may send the path switch request message to the core network device, to request switching of the data transmission path between the terminal device and the core network device to the second network device. In other words, the early status transfer message is used to trigger the second network device to send the path switch request message to the core network device, or trigger the second network device to request the core network device to switch the data transmission path between the terminal device and the core network device to the second network device.

Because the early status transfer message is sent when the first network device performs early data forwarding, and the early data forwarding is data forwarding performed before the terminal device completes handover, the path switch request message that is sent by the second network device in response to the early status transfer message is also a request sent before the terminal device completes the handover. In other words, the data transmission path between the terminal device and the core network device is switched in advance.

The first network device may determine one or more candidate network devices for the terminal device based on a measurement report reported by the terminal device. Therefore, the first network device may separately send an early status transfer message to the one or more candidate network devices, to trigger the one or more candidate network devices to send a path switch request message to the core network device.

Optionally, the path switch request message further indicates each candidate network device.

When the path switch request message indicates each candidate network device, the candidate network device may be indicated by using an identifier of the candidate network device or other information that can identify the candidate network device. This is not limited in this application. By indicating each candidate network device, the core network device determines a specific candidate network device to which the data transmission path between the terminal device and the core network device is switched.

The second network device is an example of the candidate network device. Correspondingly, the path switch request message further indicates the second network device.

In step 703, the core network device sends a path switch request acknowledgment message to the first network device. Correspondingly, the first network device receives the path switch request acknowledgment message from the core network device.

In a possible implementation of step 703, the core network device sends the path switch request acknowledgment message to the second network device, so that the second network device forwards the path switch request acknowledgment message to the first network device.

In an optional embodiment, the path switch request acknowledgment message may carry the configuration and a validity period of the second path, and the second path is the path that is established by the core network device after the terminal device completes the handover from the first network device to the second network device and that is used for communication between the first network device and the second network device.

The second path is a new path established for communication between the first network device and the second network device after an original path (for example, the first path) expires. Therefore, the first path may also be referred to as an original path, and the second path may also be referred to as a new path (path_new, P_new). The configuration of the second path may include specific path information of a path for communication between the first network device and the second network device, for example, an identifier of the second path and/or each hop node on the second path.

In a possible case, there is no gap between the validity period of the new path and the validity period of the original path between the first network device and the second network device, or the validity period of the new path and the validity period of the original path between the first network device and the second network device overlap, for example, partially or completely overlap. In an overlapping time period, the first network device and the second network device may communicate with each other through both the new path and the original path. This manner of performing transmission through both the original path and the new path may be referred to as multipath coordinated transmission, which facilitates handover of the terminal device.

In another possible case, there may be a gap (gap) between the validity period of the second path (the new path) and the validity period of the original path. The gap may be used for preparation of the second path. In the gap, there is no available path between the first network device and the second network device, that is, communication cannot be performed.

Based on the foregoing solution, when the first network device connected to the terminal device determines that the terminal device needs to be handed over but the terminal device has not been handed over, the first network device may send the early status transfer message to the second network device, to trigger the second network device to request the core network device to switch the data transmission path between the terminal device and the core network device, so that the data transmission path between the terminal device and the core network device is switched in advance. In this way, the switching of the data transmission path between the terminal device and the core network device, which is triggered by the early status transfer message, is performed in advance, thereby improving a handover success rate of the terminal device to the second network device.

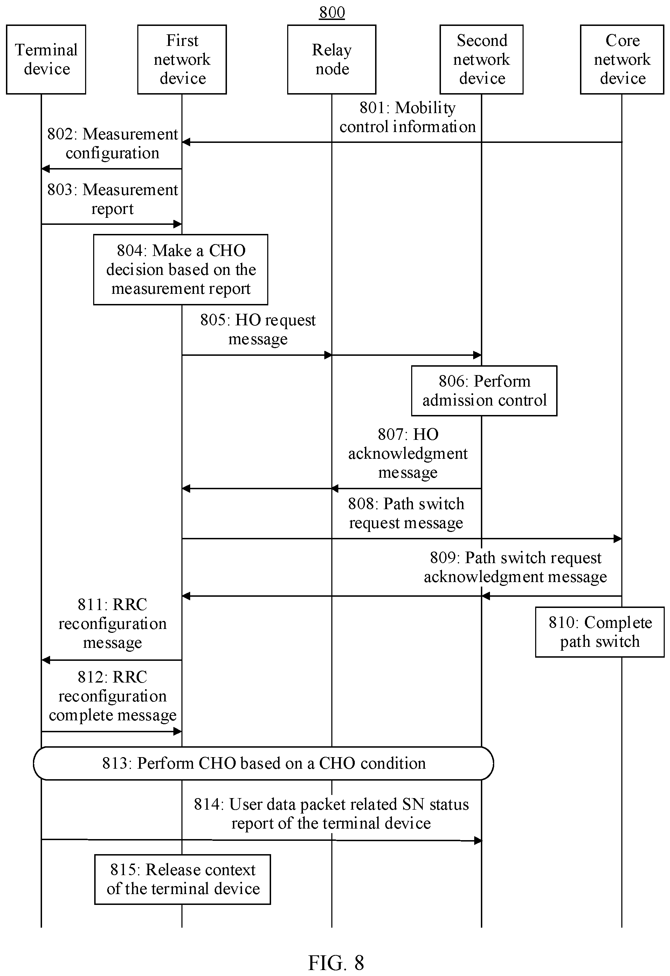

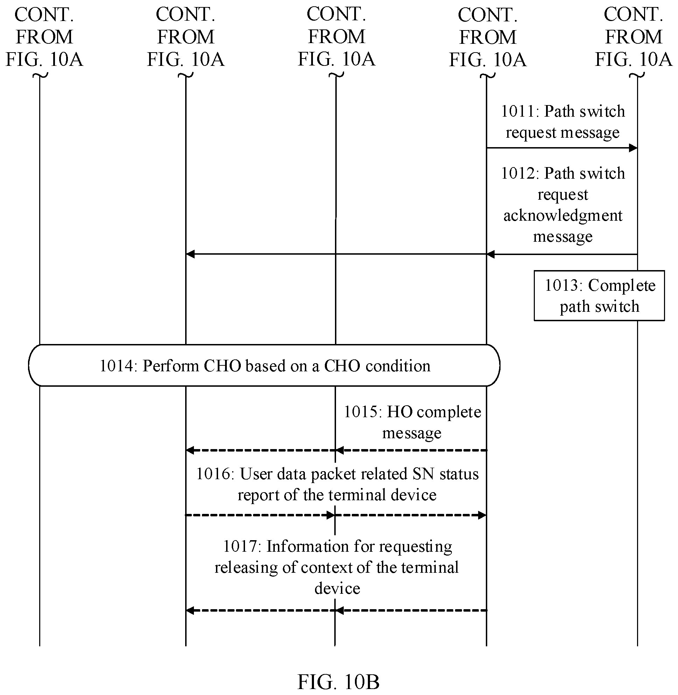

To better understand the method provided in this application, the following describes the foregoing embodiments in more detail with reference to a specific handover procedure. In the following procedures shown in FIG. 8 to FIG. 10A and FIG. 10B, an example in which there is one relay node between a first network device and a second network device is used to describe communication between the first network device and the second network device. However, this is merely shown for ease of understanding, and should not constitute any limitation on this application. There may be more relay nodes between the first network device and the second network device, or there may be no relay node between the first network device and the second network device.

For example, FIG. 8 shows a cell handover method 800 according to an embodiment of this application. The method 800 may be applied to inter-satellite cell handover. The method 800 shown in FIG. 8 is more complete processing logic of the cell handover method based on the method 500 shown in FIG. 5. The following mainly describes steps different from those in the method 500. For steps and terms that are the same as those in the method 500, refer to related descriptions in the method 500. Details are not described again.

As shown in the figure, the cell handover method 800 shown in FIG. 8 includes the following steps.

Step 801: A core network device sends mobility control information to a first network device. The mobility control information may include information such as access restrictions and roaming information of a terminal device, a path between the first network device and at least one second network device, and a validity period of the path bearer.

It should be understood that, for related explanations of the path between the first network device and the at least one second network device and the path bearer, refer to descriptions of step 601 in FIG. 6. Details are not described herein again.

Step 802: The first network device sends a measurement configuration (measurement configuration) to the terminal device. The measurement configuration may include a measurement frequency, an SSB-based measurement timing configuration (SSB-based measurement timing configuration, SMTC), a measurement reporting condition (where a reporting manner may be periodic reporting, aperiodic reporting, or event-triggered reporting), measurement objects (for example, a location of the first network device, a location of the second network device, signal quality of the first network device, and signal quality of the second network device), and the like.

For example, the measurement reporting condition may be that the signal quality of the first network device is less than a threshold (for example, less than a threshold 1) and/or the signal quality of the second network device is greater than a threshold (for example, greater than a threshold 2).

Step 803: The terminal device sends a measurement report to the first network device. The measurement report may be obtained by performing measurement based on the foregoing measurement configuration. For example, the measurement report includes location information and/or signal quality. The location information may include, for example, global navigation satellite system (global navigation satellite system, GNSS) locations of the first network device and each candidate network device, and/or identifiers (identifiers, IDs) of beam positions in coverage areas of the first network device and each candidate network device. The signal quality may be, for example, signal quality of the first network device and each candidate network device.

Step 804: The first network device makes a conditional handover (conditional handover, CHO) decision based on the measurement report of the terminal device.

Step 805: The first network device (for example, a base station or a satellite) sends a handover request message to the second network device.

As described above, the second network device is a candidate network device, and there are one or more candidate network devices. The first network device may send a handover request to the one or more candidate network devices.

In addition, if there is a relay node between the first network device and a specific candidate network device (for example, the second network device), the first network device may send the handover request message to the specific candidate network device via the relay node.

Step 806: After receiving the handover request message, the second network device performs admission control, and reserves a C-RNTI, a preamble, an RO, a time-frequency resource, and the like required for the handover of the terminal device.

In the one or more candidate network devices that receive the handover request, if one or more candidate network devices (for example, the second network device) agree to access of the terminal device, after receiving the handover request, the candidate network devices may perform admission control, and reserve the C-RNTI, the preamble, the RO, the time-frequency resource, and the like required for the handover of the terminal device.

For ease of description, the following uses an example in which the second network device is used as a candidate network device that agrees to access of the terminal device for description.

Step 807: The second network device sends a handover acknowledgment (HO ACK) message to the first network device.

As described above, if there is a relay node between the first network device and the second network device, the second network device may send the handover acknowledgment message to the first network device via the relay node.

Step 808: The first network device sends a path switch request message to the core network device within a validity period of a path bearer between the first network device and the second network device. The path switch request message may include an identifier of the second network device and time information (time_ release, T_release) (for example, a coordinated universal time (coordinated universal time, UTC) moment or a timer (timer)) at which the first network device releases context information of the terminal device, where the T_release is used to trigger the first network device to automatically release the context information of the terminal device.

Step 809: The core network device sends a path switch request acknowledgment message to the second network device, and the second network device forwards the path switch request acknowledgment message to the first network device, where the message may also carry an expiration time of a path between the first network device and the second network device.

It should be understood that the expiration time of the path between the first network device and the second network device is related to the validity period of the path bearer between the first network device and the second network device. For a specific explanation of the expiration time, refer to the related explanation in FIG. 5. Details are not described herein again.

Step 810: The core network device completes path switch.

The path switch completed by the core network device means switching of a data transmission path between the terminal device and the core network device from the first network device to the second network device. After the path switch is completed, the core network may perform data transmission with the terminal device via the second network device through a data transmission path after the switching.

Step 811: The first network device sends a radio resource control (radio resource control, RRC) reconfiguration message to the terminal device. The RRC reconfiguration message may include a handover execution condition of the terminal device, and the handover execution condition of the terminal device may be related to at least one of a location, time, or signal quality.

Step 812: The terminal device sends an RRC reconfiguration complete message to the first network device.

Step 813: The terminal device performs CHO based on a CHO condition.

For example, the terminal device may determine a target network device based on the CHO condition. After determining the target network device, the terminal device leaves a source cell, performs synchronization with a target cell, and further accesses the target cell. The target cell may be accessed by using a contention-free access procedure or an access-free procedure.

The contention-free access process may include: The second network device triggers a random access preamble allocation process by using a downlink random access indication message. In this embodiment, the second network device may instruct, by using RRC signaling, the terminal device to initiate contention-free random access. The terminal device sends a random access request to the second network device, where the terminal device initiates the random access request by using a specified preamble on a physical random access channel (physical random access channel, PRACH) resource specified by the second network device. If a plurality of PRACH resources are specified, the terminal device randomly selects a specified PRACH resource from a first available subframe in which the PRACH resource exists.

A difference between the access-free procedure and the contention-free access procedure lies in that the access-free procedure does not need to use a specified preamble to initiate an access request.

It should be understood that, if the terminal device detects that the conditional handover is not met, the terminal device does not perform handover.

Step 814: After the terminal device is successfully handed over to the second network device, the terminal device may actively send a user data packet related SN status report (status report) of the terminal device to the second network device, where the SN status report may include an SN number of a last data packet successfully received by the terminal device from the first network device before the handover, to assist the second network device in scheduling data of the terminal device.

Step 815: The first network device releases context of the terminal device based on the time information.

Based on the foregoing solution, when the first network device determines that the terminal device needs to be handed over but the terminal device has not been handed over, the first network device may determine a candidate network device (including the second network device) for the terminal device, and request the core network device to switch the data transmission path between the terminal device and the core network device, to switch the data transmission path from the first network device to the candidate network device (for example, the second network device), and does not need to wait until the terminal device completes the handover from a source network device (namely, the first network device) to the target network device, to switch the data transmission path between the terminal device and the core network device. In this way, the data transmission path between the terminal device and the core network device can be switched in advance. In general, time of handover (including handover of the terminal device on an access side and switching of the data transmission path between the terminal device and the core network device) can be shortened, thereby alleviating handover failures caused by intermittent connectivity of ISL or GSL transmission, and improving a handover success rate of the terminal device to the second network device.

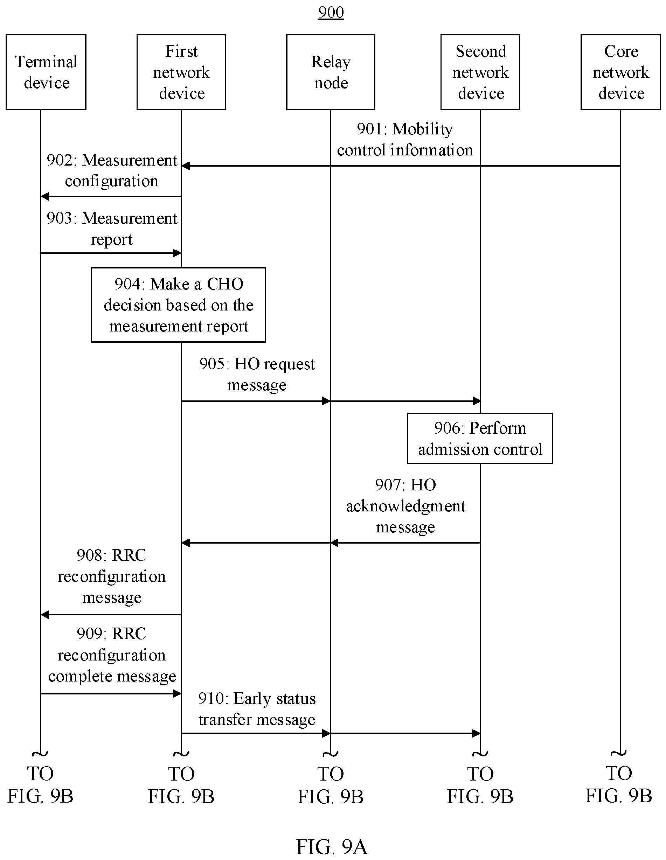

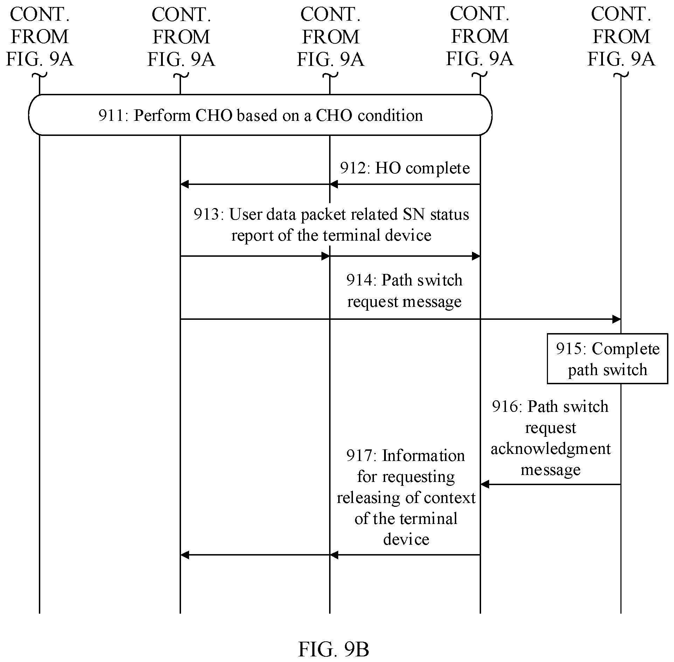

For example, FIG. 9A and FIG. 9B show a cell handover method 900 according to an embodiment of this application. The method 900 may be applied to inter-satellite cell handover. The method 900 shown in FIG. 9A and FIG. 9B is more complete processing logic of the cell handover method based on the method 600 shown in FIG. 6. The following mainly describes steps different from those in the method 600. For steps and terms that are the same as those in the method 600, refer to related descriptions in the method 600. Details are not described again.

As shown in the figure, the cell handover method 900 shown in FIG. 9A and FIG. 9B includes the following steps.

Step 901: A core network device (for example, an AMF or a UPF) sends mobility control information to a first network device. The mobility control information may include access restrictions, roaming information, and second information of a terminal device. The second information may include QoS of a path bearer between the first network device and a second network device, where the QoS may include at least one of a latency, a packet loss rate, reliability, or throughput; and a validity period (for example, (start time, end time) ([time_on, time_off], [T_on, T_off])) of a path between the first network device and the second network device.

As described above, the second network device is a candidate network device, and there are one or more candidate network devices. Therefore, the mobility control information may include path information between the first network device and the one or more candidate network devices.

It should be understood that, for related explanations of the path between the first network device and the at least one second network device and the path bearer, refer to descriptions of step 601 in FIG. 6. Details are not described herein again.

The QoS of the path bearer may be related to the service QoS requirement of the terminal device. For related explanations, refer to the related explanations in FIG. 6. Details are not described herein again.

Step 902: The first network device sends a measurement configuration to the terminal device.

For related explanations of the measurement configuration, refer to descriptions of step 802 in FIG. 8. Details are not described herein again.

Step 903: The terminal device sends a measurement report to the first network device.

For related explanations of the measurement report, refer to descriptions of step 803 in FIG. 8. Details are not described herein again.

Step 904: The first network device makes a conditional handover decision based on the measurement report of the terminal device.

Step 905: The first network device (for example, a base station or a satellite) sends a handover request to the second network device.

As described above, the second network device is a candidate network device, and there are one or more candidate network devices. The first network device may send a handover request to the one or more candidate network devices.

In addition, if there is a relay node between the first network device and a specific candidate network device (for example, the second network device), the first network device may send the handover request message to the specific candidate network device via the relay node.

Step 906: After receiving the handover request message, the second network device performs admission control, and reserves a C-RNTI, a preamble, an RO, a time-frequency resource, and the like required for the handover of the terminal device.

In the one or more candidate network devices that receive the handover request, if one or more candidate network devices (for example, the second network device) agree to access of the terminal device, after receiving the handover request message, the candidate network devices may perform admission control, and reserve the C-RNTI, the preamble, the RO, the time-frequency resource, and the like required for the handover of the terminal device.

For ease of description, the following uses an example in which the second network device is used as a candidate network device that agrees to access of the terminal device for description.

Step 907: The second network device sends a handover acknowledgment message to the first network device.

As described above, if there is a relay node between the first network device and the second network device, the second network device may send the handover acknowledgment message to the first network device via the relay node.

Step 908: The first network device sends an RRC reconfiguration message to the terminal device, where the RRC reconfiguration message may include a handover execution condition of the terminal device and third information. The handover execution condition of the terminal device is related to at least one of a location, time, or signal quality of the second network device. The third information may include QoS of a path bearer between the first network device and the second network device. The QoS of the path bearer may be used to assist in a cell handover decision of the terminal device (for example, a handover occasion of the terminal device and selection of the second network device). The QoS of the path bearer may further indicate that a conditional handover execution time configured for the terminal device is not later than an end time T_off of a validity period of the path bearer.

Step 909: The terminal device sends an RRC reconfiguration complete message to the first network device.

Step 910: The first network device sends an early status transfer message to the second network device, and forwards a part of data to the second network device.

As described above, if there is a relay node between the first network device and the second network device, the first network device may send the early status transfer message to the second network device via the relay node.

For related explanations of the part of data, refer to the explanations of the part of data in step 701 in FIG. 7. Details are not described herein again.

Step 911: The terminal device may perform CHO based on a CHO condition.

For example, the terminal device may determine a target network device based on the conditional handover condition. After determining the target network device, the terminal device leaves a source cell, performs synchronization with a target cell, and further accesses the target cell. The target cell may be accessed by using a contention-free access procedure or an access-free procedure.

For the contention-free access procedure or the access-free procedure, refer to descriptions of the method 800. Details are not described herein again.

Step 912: The second network device sends a handover success message to the first network device.

As described above, if there is a relay node between the first network device and the second network device, the second network device may send the handover success message to the first network device via the relay node.

Step 913: The first network device sends a user data packet related SN status report of the terminal device to the second network device.

As described above, if there is a relay node between the first network device and the second network device, the first network device may send SN status report information of the terminal device to the second network device via the relay node.

Step 914: The first network device sends a path switch request message to the core network device.

Step 915: The core network device completes path switch.

The path switch completed by the core network device means switching of a data transmission path between the terminal device and the core network device from the first network device to the second network device. After the path switch is completed, the core network may perform data transmission with the terminal device via the second network device through a data transmission path after the switching.

Step 916: The core network device sends a path switch request acknowledgment message to the second network device.

Step 917: The second network device sends, to the first network device, information for requesting the first network device to release context of the terminal device.

As described above, if there is a relay node between the first network device and the second network device, the second network device may send, to the first network device via the relay node, information for requesting the first network device to release the context of the terminal device.

Based on the foregoing solution, a network side may indicate, to the terminal device, QoS of a path bearer between the first network device and each of the at least one candidate network device, so that the terminal device can consider a service QoS requirement when selecting a target network device. In other words, handover of the terminal device can be assisted, thereby helping ensure the service QoS requirement of the terminal device and improving user experience of the terminal device. In addition, the network side may further indicate, to the terminal device, a validity period of at least one path corresponding to the at least one candidate network device, so that the terminal device performs handover based on the validity period. This helps avoid a handover failure caused by path failure, and can improve a handover success rate of the terminal device.

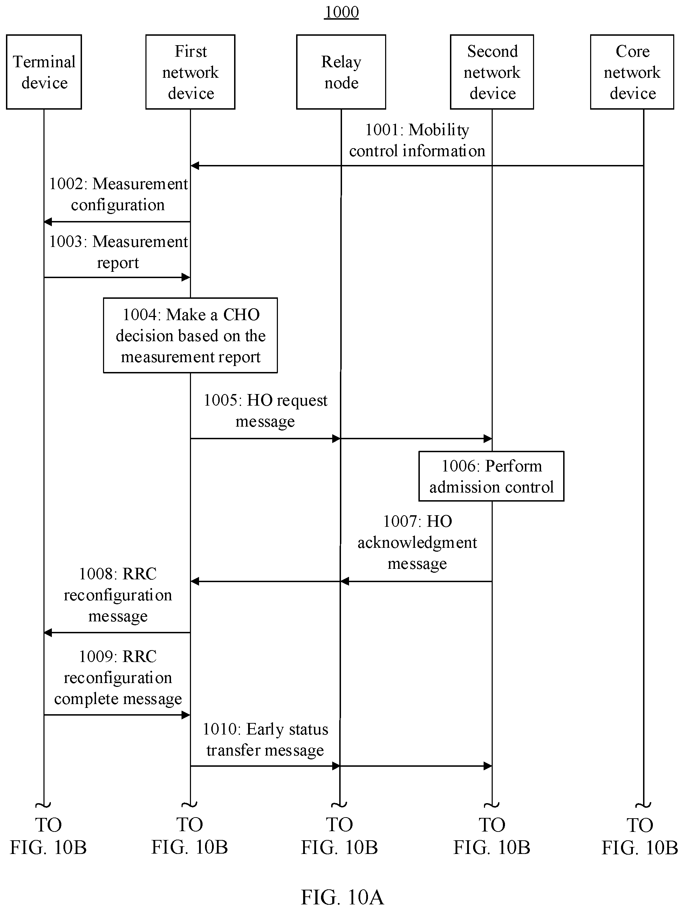

For example, FIG. 10A and FIG. 10B show a cell handover method 1000 according to an embodiment of this application. The method 1000 may be applied to inter-satellite cell handover. The method 1000 shown in FIG. 10A and FIG. 10B is more complete processing logic of the cell handover method based on the method 700 shown in FIG. 7. The following mainly describes steps different from those in the method 700. For steps and terms that are the same as those in the method 700, refer to related descriptions in the method 700. Details are not described again.

As shown in the figure, the cell handover method 1000 shown in FIG. 10A and FIG. 10B includes the following steps.

Step 1001: A core network device (for example, an AMF or a UPF) sends mobility control information to a first network device.

For related explanations of the mobility control information, refer to descriptions of step 901 in the method 900. Details are not described herein again.

Step 1002: The first network device delivers a measurement configuration to a terminal device.

For related explanations of the measurement configuration, refer to descriptions of step 802 in FIG. 8. Details are not described herein again.

Step 1003: The terminal device sends, to the first network device, a measurement report corresponding to the measurement configuration.

For related explanations of the measurement report, refer to descriptions of step 803 in FIG. 8. Details are not described herein again.

Step 1004: The first network device makes a conditional handover decision based on the measurement report of the terminal device.

Step 1005: The first network device (for example, a base station or a satellite) sends a handover request to a second network device.

As described above, the second network device is a candidate network device, and there are one or more candidate network devices. The first network device may send a handover request to the one or more candidate network devices.

In addition, if there is a relay node between the first network device and a specific candidate network device (for example, the second network device), the first network device may send the handover request message to the specific candidate network device via the relay node.

Step 1006: After receiving the handover request message, the second network device performs admission control, and reserves a C-RNTI, a preamble, an RO, a time-frequency resource, and the like required for the handover of the terminal device.

In the one or more candidate network devices that receive the handover request, if one or more candidate network devices (for example, the second network device) agree to access of the terminal device, after receiving the handover request, the candidate network devices may perform admission control, and reserve the C-RNTI, the preamble, the RO, the time-frequency resource, and the like required for the handover of the terminal device.

For ease of description, the following uses an example in which the second network device is used as a candidate network device that agrees to access of the terminal device for description.

Step 1007: The second network device sends a handover acknowledgment message to the first network device.

As described above, if there is a relay node between the first network device and the second network device, the second network device may send the handover acknowledgment message to the first network device via the relay node.

Step 1008: The first network device delivers an RRC reconfiguration message to the terminal device.

For related explanations of the RRC reconfiguration message, refer to descriptions of step 908 in the method 900. Details are not described herein again.

Step 1009: The terminal device sends an RRC reconfiguration complete message to the first network device.

Step 1010: The first network device sends an early status transfer message to the second network device, and forwards a part of data to the second network device.

As described above, if there is a relay node between the first network device and the second network device, the first network device may send the early status transfer message to the second network device via the relay node.

For related explanations of the part of data, refer to the explanations of the part of data in step 701 in FIG. 7. Details are not described herein again.

Step 1011: The second network device sends a path switch request message to the core network device based on the early status transfer message, where the path switch request message is used to request switching of a data transmission path between the terminal device and the core network device to the second network device.

Step 1012: The core network device sends a path switch request acknowledgment message to the second network device, and the second network device sends the path switch request acknowledgment message to the first network device. The path switch request acknowledgment message may carry a configuration of a new path (for example, a second path) between the first network device and the second network device and validity time (for example, (a start time of the new path, an end time of the new path) ([time_on_new, time_off_new], [T_on_new, T_off_new])) of the new path. There may be an interval between time of the new path and time of an original path. Within the interval, neither the new path nor the original path is available.

As described above, if there is a relay node between the first network device and the second network device, the second network device may send the path switch request acknowledgment message to the first network device via the relay node.

Step 1013: The core network device completes path switch.

The path switch completed by the core network device means switching of a data transmission path between the terminal device and the core network device from the first network device to the second network device. After the path switch is completed, the core network may perform data transmission with the terminal device via the second network device through a data transmission path after the switching.

Step 1014: The terminal device may perform CHO based on a CHO condition.

For example, the terminal device may determine a target network device based on the conditional handover condition. After determining the target network device, the terminal device leaves a source cell, performs synchronization with a target cell, and further accesses the target cell. The target cell may be accessed by using a contention-free access procedure or an access-free procedure.

For the contention-free access procedure or the access-free procedure, refer to descriptions of the method 800. Details are not described herein again.

It is assumed that the original path between the first network device and the second network device expires, and the new path takes effect. In this case, the first network device and the second network device may communicate with each other through the new path. Steps 1015 to 1017 are examples of steps in which the first network device communicates with the second network device through the new path. In the figure, for ease of differentiation, the steps of using the new path for communication are represented by using dashed lines.

Step 1015: The second network device sends a handover complete message to the first network device through the new path.

As described above, if there is a relay node between the first network device and the second network device, the second network device may send the handover complete message to the first network device via the relay node.

Step 1016: The first network device sends a user data packet related SN status report of the terminal device to the second network device through the new path.

As described above, if there is a relay node between the first network device and the second network device, the first network device may send the user data packet related SN status report of the terminal device to the second network device via the relay node.

Step 1017: The second network device sends, to the first network device through the new path, a request message for requesting the first network device to release context of the terminal device, and the first network device releases the context of the terminal device after receiving the request message.

As described above, if there is a relay node between the first network device and the second network device, the second network device may send, to the first network device via the relay node, the request message for requesting the first network device to release the context of the terminal device.

Based on the foregoing solution, when the first network device connected to the terminal device determines that the terminal device needs to be handed over but the terminal device has not been handed over, the first network device may send the early status transfer message to the second network device, to trigger the second network device to request the core network device to switch the data transmission path between the terminal device and the core network device, so that the data transmission path between the terminal device and the core network device is switched in advance. In this way, the switching of the data transmission path between the terminal device and the core network device, which is triggered by the early status transfer message, is performed in advance, thereby improving a handover success rate of the terminal device to the second network device.

It should be understood that the procedures shown in FIG. 5 to FIG. 10A and FIG. 10B are merely examples, and should not constitute any limitation on this application. In some other embodiments, these procedures may also include more or fewer steps.

It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

The path switch request message from the second network device is received, where the second network device is one of the at least one candidate network device, and the path switch request message is used to request switching of the data transmission path between the terminal device and the core network device to the second network device. The foregoing describes in detail the cell handover methods provided in embodiments of this application with reference to the accompanying drawings. The following describes in detail apparatuses provided in embodiments of this application with reference to the accompanying drawings.

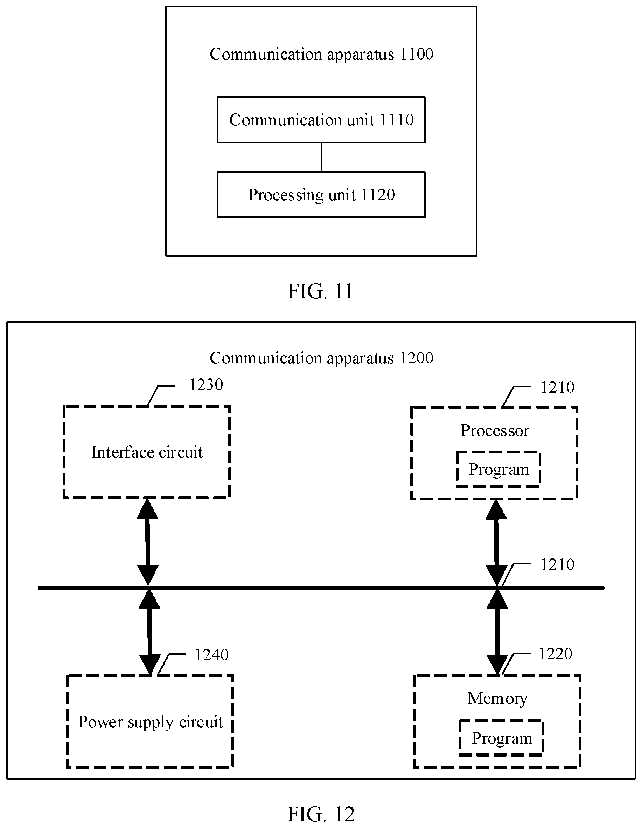

FIG. 11 and FIG. 12 are block diagrams of possible communication apparatuses according to embodiments of this application. These communication apparatuses may be configured to implement functions of the first network device, functions of the second network device, functions of the terminal device, or functions of the core network device in the foregoing method embodiments, and therefore can also implement beneficial effects of the foregoing method embodiments.

A communication apparatus provided in this application is shown in FIG. 11. The communication apparatus 1100 includes a communication unit 1110 and a processing unit 1120. The communication unit 1110 may be configured to perform a receiving or sending action, and the processing unit 1120 may be configured to perform actions other than receiving and sending, for example, generating information or a message, and processing received information or message.

In a possible design, the communication apparatus 1100 is configured to implement the functions of the first network device in any one of the method embodiments shown in FIG. 5 to FIG. 10A and FIG. 10B. For example, the communication apparatus may be the first network device, or may be a component (for example, a chip, a chip system, or a processor) configured in the first network device, or may be a logical module or software that can implement a part or all of the functions of the first network device.

For example, when the communication apparatus 1100 is configured to implement functions of the method 500, the communication unit 1110 is configured to: send a handover request message to the second network device, where the handover request message is used to request handover of the terminal device to the second network device, and the second network device is a candidate network device; receive a handover request acknowledgment message from the second network device; and send a path switch request message to the core network device, where the path switch request message is used to request switching of a data transmission path between the terminal device and the core network device to the second network device.

Optionally, the communication unit 1110 is further configured to: receive first information from the core network device, where the first information indicates a validity period of a first path, and the first path is used for communication between the first network device and the second network device within the validity period; and send the path switch request message to the core network device within the validity period.

Optionally, the processing unit 1120 is configured to release context of the terminal device based on time information after the terminal device completes handover, where the time information indicates a time at which the first network device releases the context of the terminal device.

Optionally, the path switch request message carries the time information, and the time information indicates the time at which the first network device releases the context of the terminal device.

Optionally, the path switch request message further indicates the second network device.

Optionally, the communication unit 1110 is further configured to receive a path switch request acknowledgment message from the core network device.

Optionally, the path switch request acknowledgment message indicates an expiration time of the first path between the first network device and the second network device.

For example, when the communication apparatus 1100 is configured to implement functions of the method 600, the communication unit 1110 is configured to: receive second information from the core network device, where the second information indicates at least one piece of QoS, and each of the at least one piece of QoS is QoS of a path bearer between the first network device and one of at least one candidate network device; and send third information to the terminal device, where the third information indicates the at least one piece of QoS.

Optionally, the second information further indicates a validity period of at least one path, the at least one path corresponds to the at least one candidate network device, and a path corresponding to each candidate network device is used for communication with the first network device within a corresponding validity period; and the third information further indicates the validity period of the at least one path.

Optionally, the second information is mobility control information.

Optionally, the third information is carried in an RRC reconfiguration message.

For example, when the communication apparatus 1100 is configured to implement functions of the method 700, the communication unit 1110 is configured to: send an early status transfer message to the second network device, where the early status transfer message is used to trigger the second network device to send a path switch request message, the path switch request message is used to request switching of a data transmission path between the terminal device and the core network device to the second network device, and the second network device is a candidate network device; and receive a path switch request acknowledgment message from the core network device.

Optionally, the path switch request acknowledgment message carries a configuration and validity time of a second path, and the second path is a path that is established after the terminal device completes handover from the first network device to the second network device and that is used for communication between the first network device and the second network device.

In another possible design, the communication apparatus 1100 is configured to implement the functions of the core network device in any one of the method embodiments shown in FIG. 5 to FIG. 10A and FIG. 10B. For example, the communication apparatus may be the core network device, or may be a component (for example, a chip, a chip system, or a processor) configured in the core network device, or may be a logical module or software that can implement a part or all of the functions of the core network device.

For example, when the communication apparatus 1100 is configured to implement the functions of the method 500, the communication unit 1110 is configured to: receive a path switch request message from the first network device, where the path switch request message is used to request switching of a data transmission path between the terminal device and the core network device to the second network device, and the second network device is a candidate network device; and send a path switch request acknowledgment message to the first network device.

Optionally, the communication unit 1110 is further configured to send first information to the first network device, where the first information indicates a validity period of a first path, and the first path is used for communication between the first network device and the second network device within the validity period.

Optionally, the path switch request message carries time information, and the time information indicates a time at which the first network device releases context of the terminal device.

Optionally, the path switch request message further indicates the second network device.

Optionally, the path switch request acknowledgment message indicates an expiration time of the first path between the first network device and the second network device.

For example, when the communication apparatus 1100 is configured to implement the functions of the method 600, the processing unit 1120 is configured to generate second information, where the second information indicates at least one piece of QoS, and each of the at least one piece of QoS is QoS of a path bearer between the first network device and one of the at least one candidate network device; and the sending unit 1110 is configured to send the second information to the first network device.

Optionally, the second information further indicates a validity period of at least one path, the at least one path corresponds to the at least one candidate network device, and a path corresponding to each candidate network device is used for communication with the first network device within a corresponding validity period.

For example, when the communication apparatus 1100 is configured to implement the functions of the method 700, the communication unit 1110 is configured to: receive a path switch request message from the second network device, where the second network device is one of at least one candidate network device, and the path switch request message is used to request switching of a data transmission path between the terminal device and the core network device to the second network device; and send a path switch request acknowledgment message to the first network device.

Optionally, the path switch request acknowledgment message carries a configuration and validity time of a second path, and the second path is a path that is established after the terminal device completes handover from the first network device to the second network device and that is used for communication between the first network device and the second network device within the validity period.

In another possible design, the communication apparatus 1100 is configured to implement the functions of the second network device in any one of the method embodiments shown in FIG. 5 to FIG. 10A and FIG. 10B. For example, the communication apparatus may be the second network device, or may be a component (for example, a chip, a chip system, or a processor) configured in the second network device, or may be a logical module or software that can implement a part or all of the functions of the second network device.

For example, when the communication apparatus 1100 is configured to implement the functions of the method 500, the communication unit 1110 is configured to: receive a path switch request acknowledgment message from the core network device, where the path switch request acknowledgment message is a response message of the core network device to a path switch request message from the first network device, and the path switch request message is used to request switching of a data transmission path between the terminal device and the core network device to the second network device; and send the path switch request acknowledgment message to the first network device.

Optionally, the path switch request acknowledgment message indicates an expiration time of the first path between the first network device and the second network device.

Optionally, the communication unit 1110 is further configured to receive an SN status report from the terminal device.

For example, when the communication apparatus 1100 is configured to implement the functions of the method 600, the communication unit 1110 is configured to: receive third information from the first network device, where the third information indicates at least one candidate network device and at least one piece of QoS corresponding to the at least one candidate network device, and each of the at least one piece of QoS is QoS of a path bearer between a corresponding candidate network device and the first network device; and determine a target network device from the at least one candidate network device based on a service QoS requirement and the at least one piece of QoS.

Optionally, the third information further indicates a validity period of at least one path, the at least one path corresponds to the at least one candidate network device, and a path corresponding to each candidate network device is used for communication with the first network device within a corresponding validity period.

Optionally, the third information is carried in an RRC reconfiguration message.

For example, when the communication apparatus 1100 is configured to implement the functions of the method 700, the communication unit 1110 is configured to: receive an early status transfer message from the first network device, where the early status transfer message is used to trigger the second network device to send a path switch request message, the path switch request message is used to request switching of a data transmission path between the terminal device and the core network device to the second network device, and the second network device is a candidate network device; and send the path switch request message to the core network device based on the early status transfer message.

Optionally, the communication unit 1110 is further configured to receive a path switch request acknowledgment message from the core network device, and send the path switch request acknowledgment message from the core network device to the first network device.

In another possible design, the communication apparatus 1100 is configured to implement the functions of the terminal device in any one of the method embodiments shown in FIG. 5 to FIG. 10A and FIG. 10B. For example, the communication apparatus may be the terminal device, or may be a component (for example, a chip, a chip system, or a processor) configured in the terminal device, or may be a logical module or software that can implement a part or all of the functions of the terminal device.

For example, when the communication apparatus 1100 is configured to implement the functions of the method 500, the processing unit 1120 is configured to hand over from the first network device to a third network device. The communication unit 1110 is configured to send an SN status report of the terminal device to the third network device.

Optionally, the communication unit 1110 is further configured to receive third information from the first network device, where the third information indicates at least one candidate network device and at least one piece of QoS corresponding to the at least one candidate network device, and each of the at least one piece of QoS is QoS of a path bearer between a corresponding candidate network device and the first network device.

Optionally, the third information further indicates a validity period of at least one path, the at least one path corresponds to the at least one candidate network device, and a path corresponding to each candidate network device is used for communication with the first network device within a corresponding validity period.

Optionally, the third information is carried in an RRC reconfiguration message.

For example, when the communication apparatus 1100 is configured to implement the functions of the method 600, the communication unit 1110 is configured to receive third information from the first network device, where the third information indicates at least one piece of QoS corresponding to at least one candidate network device, and each of the at least one piece of QoS is QoS of a path bearer between a corresponding candidate network device and the first network device; and the processing unit 1120 is configured to determine a target network device from the at least one candidate network device based on a service QoS requirement and the at least one piece of QoS.

Optionally, the third information further indicates a validity period of at least one path, the at least one path corresponds to the at least one candidate network device, and a path corresponding to each candidate network device is used for communication with the first network device within a corresponding validity period.

Optionally, the third information is carried in an RRC reconfiguration message.

It may be understood that division of the units of the foregoing apparatus is merely logical function division. Each function may correspond to one functional unit, or two or more functions may be integrated into one functional unit. During actual implementation, all or some of the units may be integrated into one physical entity, or may be distributed in different physical entities. In addition, the functional units may be implemented in a form of hardware, or may be implemented in a form of software, or may be implemented in a manner of hardware in combination with software. Whether a function is performed by hardware or software depends on particular applications and design constraint conditions of the technical solutions. A person skilled in the art may use different methods to implement the described functions for each particular application, but it should not be considered that the implementation goes beyond the scope of this application.

Another communication apparatus provided in this application is shown in FIG. 12. The communication apparatus 1200 includes at least one processor 1210. The at least one processor 1210 may be configured to execute a computer program or instructions in a memory, to implement the steps performed by the first network device, the steps performed by the second network device, the steps performed by the terminal device, or the steps performed by the core network device in any one of the method embodiments shown in FIG. 5 to FIG. 10A and FIG. 10B.

Optionally, the communication apparatus 1200 may further include at least one memory 1220, configured to store instructions executed by the processor 1210, input data required by the processor 1210 to run the instructions, or data generated after the processor 1210 runs the instructions. The at least one processor 1210 and the at least one memory 1220 may be separately disposed. For example, each memory may be connected to one or more processors, so that the connected processors can read information from the memory, and store and/or write information into the memory. Alternatively, the at least one processor 1210 and the at least one memory 1220 may be integrated together. For example, one or more memories may be integrated into one processor.

Optionally, the communication apparatus 1200 further includes an interface circuit 1230, which may be configured for data and/or signaling transmission. The at least one processor 1210 and the interface circuit 1230 are coupled to each other. It may be understood that the interface circuit 1230 may be a transceiver, an input/output circuit, a bus, a module, a pin, or another type of communication interface. An input circuit in the input/output circuit may be configured for receiving, and an output interface may be configured for sending.

Optionally, the communication apparatus 1200 further includes a power supply circuit 1240, and the power supply circuit 1240 may be configured to supply power to the communication apparatus 1200.

When the communication apparatus 1200 is configured to implement the methods shown in FIG. 5 to FIG. 10A and FIG. 10B, the processor 1210 is configured to perform the functions of the foregoing processing unit, and the interface circuit 1220 is configured to perform the functions of the foregoing receiving unit and/or the foregoing sending unit. Whether the interface circuit 1220 is configured for sending or receiving may be specifically determined based on whether a sending action or a receiving action is performed in the solution performed by the communication apparatus 1200.

It may be understood that when the communication apparatus 1200 is a communication device (for example, a first network device, a second network device, a terminal device, or a core network device), the interface circuit 1220 may be a transceiver, and may specifically include a transmitter and a receiver. The transmitter is configured to send a signal, and the receiver is configured to receive a signal. When the communication apparatus 1200 is a chip used in a communication device, the interface circuit 1220 may be an input/output circuit, a bus, a module, a pin, or another type of communication interface. In the input/output circuit, an input circuit may be configured for receiving, and an output interface may be configured for sending.

It should be understood that in the communication apparatus 1200 shown in FIG. 12, the processor 1210 may correspond to the processing unit 1120 in the communication apparatus 1100, and the interface circuit 1220 may correspond to the communication unit 1110 in the communication apparatus 1100.

It should be further understood that the coupling in embodiments of this application is an indirect coupling or a communication connection between apparatuses, units, or modules, may be in an electrical, mechanical, or another form, and is used for information exchange between the apparatuses, the units, or the modules. A specific connection medium between the at least one processor 1210, the at least one memory 1220, the interface circuit 1230, and the power supply circuit 1240 is not limited in embodiments of this application. In this embodiment of this application, in FIG. 11, the processor 1210, the memory 1220, the interface circuit 1230, and the power supply circuit 1240 are connected through a bus 1250. The bus 1250 is represented by a bold line in FIG. 12. A manner of connection between other components is merely described as an example, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, only one thick line is used to represent in FIG. 12, but it does not mean that there is only one bus or only one type of bus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another proper type.

This application further provides a communication system. The communication system includes one or more of the first network device, the second network device, the terminal device, or the core network device described above.

This application further provides a computer program product. The computer program product includes a computer program (which may also be referred to as code or instructions). When the computer program is run, a computer is enabled to perform the method performed by the first network device, the method performed by the core network device, the method performed by the second network device, or the method performed by the terminal device in the embodiments shown in FIG. 5 to FIG. 10A and FIG. 10B.

This application further provides a computer-readable storage medium. The computer-readable storage medium stores a computer program (which may also be referred to as code or instructions). When the computer program is run, a computer is enabled to perform the method performed by the first network device, the method performed by the core network device, or the method performed by the second network device or the terminal device in the embodiments shown in FIG. 5 to FIG. 10A and FIG. 10B.

The terms such as "unit" and "module" used in this specification may represent computer-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (steps) may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or a part of functions of functional units may be implemented by using software, hardware, firmware, or any combination thereof. When all or a part of functions of functional units are implemented by using the software, all or a part of functions of functional units may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

When functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell handover method, applied to a first network device, wherein the method comprises:
sending a handover request message to a second network device, wherein the handover request message is used to request handover of a terminal device to the second network device, and the second network device is a candidate network device;
receiving a handover request acknowledgment message from the second network device; and
sending a path switch request message to a core network device, wherein the path switch request message is used to request switching of a data transmission path between the terminal device and the core network device to the second network device.

2. The method according to claim 1, wherein the method further comprises:
receiving first information from the core network device, wherein the first information indicates a validity period of a first path, and the first path is used for communication between the first network device and the second network device within the validity period; and
sending the path switch request message to the core network device comprises:
sending the path switch request message to the core network device within the validity period.

3. The method according to claim 1 or 2, wherein the method further comprises:
releasing context of the terminal device based on time information after the terminal device completes handover, wherein the time information indicates a time at which the first network device releases the context of the terminal device.

4. The method according to claim 3, wherein the path switch request message carries the time information, and the time information indicates the time at which the first network device releases the context of the terminal device.

5. The method according to any one of claims 1 to 4, wherein the path switch request message further indicates the second network device.

6. The method according to any one of claims 1 to 5, wherein the method further comprises:
receiving a path switch request acknowledgment message from the core network device.

7. The method according to claim 6, wherein the path switch request acknowledgment message indicates an expiration time of the first path between the first network device and the second network device.

8. A cell handover method, applied to a core network device, wherein the method comprises:
receiving a path switch request message from a first network device, wherein the path switch request message is used to request switching of a data transmission path between a terminal device and the core network device to a second network device, and the second network device is a candidate network device; and
sending a path switch request acknowledgment message to the first network device.

9. The method according to claim 8, wherein the method further comprises:
sending first information to the first network device, wherein the first information indicates a validity period of a first path, and the first path is used for communication between the first network device and the second network device within the validity period.

10. The method according to claim 8, wherein the path switch request message carries time information, and the time information indicates a time at which the first network device releases context of the terminal device.

11. The method according to any one of claims 8 to 10, wherein the path switch request message further indicates the second network device.

12. The method according to claim 11, wherein the path switch request acknowledgment message indicates an expiration time of the first path between the first network device and the second network device.

13. A cell handover method, applied to a second network device, wherein the method comprises:
receiving a path switch request acknowledgment message from a core network device, wherein the path switch request acknowledgment message is a response message of the core network device to a path switch request message from a first network device, and the path switch request message is used to request switching of a data transmission path between a terminal device and the core network device to the second network device; and
sending the path switch request acknowledgment message to the first network device.

14. The method according to claim 13, wherein the path switch request acknowledgment message indicates an expiration time of a first path between the first network device and the second network device.

15. The method according to claim 13 or 14, wherein the method further comprises:
receiving a data packet-related sequence number SN status report from the terminal device.

16. A cell handover method, applied to a terminal device, wherein the method comprises:
handing over from a first network device to a third network device; and
sending an SN status report of the terminal device to the third network device.

17. The method according to claim 16, wherein the method further comprises:
receiving third information from the first network device, wherein the third information indicates at least one candidate network device and at least one piece of quality of service QoS corresponding to the at least one candidate network device, and each of the at least one piece of QoS is QoS of a path bearer between a corresponding candidate network device and the first network device.

18. The method according to claim 17, wherein the third information further indicates a validity period of at least one path, the at least one path corresponds to the at least one candidate network device, and a path corresponding to each candidate network device is used for communication with the first network device within a corresponding validity period.

19. The method according to claim 17 or 18, wherein the third information is carried in a radio resource control RRC reconfiguration message.

20. A cell handover method, applied to a first network device, wherein the method comprises:
receiving second information from a core network device, wherein the second information indicates at least one piece of QoS, and each of the at least one piece of QoS is QoS of a path bearer between the first network device and one of at least one candidate network device; and
sending third information to a terminal device, wherein the third information indicates the at least one piece of QoS.

21. The method according to claim 20, wherein the second information further indicates a validity period of at least one path, the at least one path corresponds to the at least one candidate network device, and a path corresponding to each candidate network device is used for communication with the first network device within a corresponding validity period; and
the third information further indicates the validity period of the at least one path.

22. The method according to claim 20 or 21, wherein the second information is mobility control information.

23. A cell handover method, applied to a terminal device, wherein the method comprises:
receiving third information from a first network device, wherein the third information indicates at least one piece of quality of service QoS corresponding to at least one candidate network device, and each of the at least one piece of QoS is QoS of a path bearer between a corresponding candidate network device and the first network device; and
determining a target network device from the at least one candidate network device based on a service QoS requirement and the at least one piece of QoS.

24. The method according to claim 23, wherein the third information further indicates a validity period of at least one path, the at least one path corresponds to the at least one candidate network device, and a path corresponding to each candidate network device is used for communication with the first network device within a corresponding validity period.

25. The method according to claim 23 or 24, wherein the third information is carried in an RRC reconfiguration message.

26. A cell handover method, applied to a core network device, wherein the method comprises:
generating second information, wherein the second information indicates at least one piece of QoS, and each of the at least one piece of QoS is QoS of a path bearer between a first network device and one of at least one candidate network device; and
sending the second information to the first network device.

27. The method according to claim 26, wherein the second information further indicates a validity period of at least one path, the at least one path corresponds to the at least one candidate network device, and a path corresponding to each candidate network device is used for communication with the first network device within a corresponding validity period.

28. A cell handover method, applied to a first network device, wherein the method comprises:
sending an early status transfer message to a second network device, wherein the early status transfer message is used to trigger the second network device to send a path switch request message, the path switch request message is used to request switching of a data transmission path between a terminal device and a core network device to the second network device, and the second network device is a candidate network device; and
receiving a path switch request acknowledgment message from the core network device.

29. The method according to claim 28, wherein the path switch request acknowledgment message carries a configuration and validity time of a second path, and the second path is a path that is established after the terminal device completes handover from the first network device to the second network device and that is used for communication between the first network device and the second network device.

30. A cell handover method, applied to a second network device, wherein the method comprises:
receiving an early status transfer message from a first network device, wherein the early status transfer message is used to trigger the second network device to send a path switch request message, the path switch request message is used to request switching of a data transmission path between a terminal device and a core network device to the second network device, and the second network device is a candidate network device; and
sending the path switch request message to the core network device based on the early status transfer message.

31. The method according to claim 30, wherein the method further comprises:
receiving a path switch request acknowledgment message from the core network device; and
sending the path switch request acknowledgment message from the core network device to the first network device.

32. A cell handover method, applied to a core network device, wherein the method comprises:
receiving a path switch request message from a second network device, wherein the second network device is one of at least one candidate network device, and the path switch request message is used to request switching of a data transmission path between a terminal device and the core network device to the second network device; and
sending a path switch request acknowledgment message to a first network device.

33. The method according to claim 32, wherein the path switch request acknowledgment message carries a configuration and validity time of a second path, and the second path is a path that is established after the terminal device completes handover from the first network device to the second network device and that is used for communication between the first network device and the second network device within the validity period.

34. A communication apparatus, comprising a unit configured to implement the method according to any one of claims 1 to 33.

35. A communication apparatus, comprising one or more processors, wherein the one or more processors are configured to execute a computer program or instructions stored in a memory, so that the apparatus performs the method according to any one of claims 1 to 33.

36. A computer-readable storage medium, configured to store a computer program, wherein the computer program comprises instructions used to implement the method according to any one of claims 1 to 33.

37. A computer program product, wherein the computer program product comprises instructions, and when the instructions are run on a computer, the computer is enabled to implement the method according to any one of claims 1 to 33.
